# EUROPÄISCHE PATENTSCHRIFT

(11) **EP 4 078 327 B1**
(45) Veröffentlichungstag und Bekanntmachung des Hinweises auf die Patenterteilung: **08.04.2026**
(21) Anmeldenummer: 20838966.8
(22) Anmeldetag: 18.12.2020
(51) Int. Cl.: G05G 1/10, G05G 5/03, F16F 9/53, G05G 1/02

(54) **MAGNETORHEOLOGISCHE BREMSVORRICHTUNG, INSBESONDERE BEDIENEINRICHTUNG**
MAGNETORHEOLOGICAL BRAKING DEVICE, IN PARTICULAR OPERATING APPARATUS
SYSTÈME DE FREINAGE MAGNÉTORHÉOLOGIQUE, EN PARTICULIER DISPOSITIF DE COMMANDE

(30) Priorität: 18.12.2019 DE 102019135030
(43) Veröffentlichungstag der Anmeldung: 26.10.2022
(73) Patentinhaber: INVENTUS Engineering GmbH, 6771 St. Anton i.M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2020/087161
(87) Internationale Veröffentlichungsnummer: WO 2021/123261

(56) Entgegenhaltungen:
- EP-A1- 3 382 495
- EP-A2- 1 168 622

## Beschreibung

Die vorliegende Erfindung betrifft eine magnetorheologische Bremsvorrichtung zum Bremsen bzw. Verzögern von Drehbewegungen und insbesondere eine magnetorheologische Bedieneinrichtung zur Einstellung von Bedienzuständen wenigstens mittels Drehbewegungen. Die Bremsvorrichtung weist wenigstens eine Achseinheit und wenigstens einen um die Achseinheit drehbaren Drehkörper auf. Die Drehbarkeit des Drehkörpers ist mittels wenigstens einer magnetorheologischen Bremseinrichtung gezielt bremsbar.

Solche Bremsvorrichtungen ermöglichen ein besonders gezieltes Verzögern bis hin zu einem Blockieren von Drehbewegungen. Mitunter sind die Bremsvorrichtungen als Bedieneinrichtungen ausgebildet. Solche Bedieneinrichtungen finden immer häufiger in verschiedensten Geräten und z. B. in Kraftfahrzeugen (z.B. Bedienelement in der Mittelkonsole, in dem Lenkrad, beim Sitz...), der Medizintechnik (z.B. zum Einstellen der medizinischen Geräte) oder bei Smart Devices (z.B. Smartphone, Smartwatch, Computerperipherie, Computermaus, Gamecontroller, Joystick), OFF-Highway Fahrzeugen (z. B. Bedienelemente in Landmaschinen), Booten/Schiffen, Flugzeugen Verwendung, um beispielsweise Menüs auszuwählen oder auch um präzise Steuerungen vornehmen zu können. Mittels der magnetorheologischen Bremseinrichtung können z. B. unterschiedliche Momente, Anschläge und Rasterungen für die Drehbewegung eingestellt werden. So kann eine besondere Haptik bei der Einstellung von Bedienzuständen erreicht werden (haptisches Feedback), welche den Benutzer unterstützt und sehr gezielte Einstellungen erlaubt und somit die Bedienkomplexität reduziert.

Um die magnetorheologische Bremseinrichtung gezielt ansteuern zu können, ist in der Regel eine Sensoreinrichtung zum Erkennen und zur Überwachung der Drehposition vorgesehen. Allerdings bringt deren konstruktive Unterbringung in der Bremsvorrichtung erhebliche Schwierigkeiten mit sich, besonders wenn der vorhandene Bauraum sehr klein ist.

So muss die Sensoreinrichtung (z.B. Abstand des Magnetringes zum Sensor) in der Regel innerhalb eines sehr schmalen Toleranzbandes zu den zu überwachenden Bauteilen angeordnet werden. Z. B. führen Abweichungen der Abstände solcher Bauteile zu einer Verschlechterung des Messsignals und zu störendem Rauschen. Das ist besonders bei feinen Rasterungen, Drehrichtungsumkehr mit Anschlag bzw. Sperrung in eine Drehrichtung (Clockwise oder Counterclockwise; Freilauf in eine Richtung) und bei präzisen Einstelloptionen von großem Nachteil (z.B. Sensor mit 90.112 Inkrementen pro Umdrehung). Haptische Aktoren wie z.B. Dreh/Drücksteller stellen hohe Anforderungen an die Verstellpräzision, da diese meist mit den sehr feinfühligen Fingern betätigt werden. Kleinste Winkelfehler oder Momentenunterschiede, besonders bei elektronisch generierten Anschlägen mit Drehrichtungsumkehr, fühlen sich haptisch schlecht an. Zudem ergeben sich aufgrund der meist zahlreichen betroffenen Bauteile viele Schnittstellen mit einer langen Toleranzkette und somit eine hohe Summentoleranz.

Weitere Probleme ergeben sich durch die meist nur sehr geringen Abmessungen der Bremsvorrichtung. So stehen z. B. für eine als Daumenwalze ausgebildete Bremsvorrichtung oft nur 12 mm im Durchmesser bereit, wie z.B. bei einem mit einem Finger (z.B. Daumen) drehbaren Rad (Walze) in einem Lenkrad bzw. einer Lenkradspeiche von z.B. einem Kraftfahrzeug (z.B. zur Einstellung der Lautstärke des Infotainments). Somit ist der Bauraum für die Sensoreinrichtung sehr begrenzt. Insgesamt ergibt sich dadurch ein montage-, kosten- und bauraumtechnischer Optimierungsbedarf.

Besonders problematisch ist meist auch die Beeinflussung der Sensorsignale durch das von der Bremseinrichtung im Betrieb erzeugte Magnetfeld. Auch externe Störfelder stellen oft störende Einflüsse dar. Somit ergibt sich auch bei der Abschirmung der Sensoreinrichtung vor solchen Einflüssen erheblicher Verbesserungsbedarf.

Eine gattungsgemäße magnetorheologische Bremsvorrichtung ist aus der EP 1 168 622 A2 bekannt.

Aus der EP 3 382 495 A1 ist ein magnetorheologischer Drehknopf für ein Kraftfahrzeug bekannt. Der Drehknopf kann in einer Mittelkonsole montiert werden und beispielsweise zum Einstellen der Lüftung, der Temperatur oder der Anströmung dienen.

Demgegenüber ist es die Aufgabe der vorliegenden Erfindung, eine verbesserte Bremsvorrichtung zur Verfügung zu stellen. Vorzugsweise soll die Abschirmung der Sensoreinrichtung vor Störeinflüssen verbessert werden. Insbesondere soll die konstruktive Unterbringung (Bauraumbedarf, Anordnung der Bauteile, Summentoleranz der Bauteile...) der Sensoreinrichtung verbessert werden. Vorzugsweise soll eine zuverlässige und möglichst präzise sensorische Erfassung und zugleich eine Bauraum sparende Integration in der magnetorheologische Bremsvorrichtung möglich sein.

Diese Aufgabe wird durch eine Bremsvorrichtung mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Bremsvorrichtung ist magnetorheologisch ausgebildet und dient zur Einstellung von Bedienzuständen wenigstens mittels Drehbewegungen. Die Bremsvorrichtung umfasst wenigstens eine Achseinheit. Die Bremsvorrichtung umfasst wenigstens einen Drehkörper. Der Drehkörper ist um die Achseinheit drehbar. Eine Drehbarkeit des Drehkörpers (relativ zu der Achseinheit) ist mittels wenigstens einer magnetorheologischen Bremseinrichtung gezielt bremsbar. Die Bremsvorrichtung umfasst wenigstens eine Sensoreinrichtung zur Erfassung einer Drehposition des Drehkörpers insbesondere in Bezug zu Achseinheit. Die Sensoreinrichtung umfasst wenigstens eine Magnetringeinheit und wenigstens einen Magnetfeldsensor zur Erfassung eines Magnetfeldes der Magnetringeinheit. Dabei umfasst die magnetorheologische Bremsvorrichtung wenigstens eine Abschirmeinrichtung zur wenigstens teilweisen Abschirmung der Sensoreinrichtung wenigstens vor einem Magnetfeld einer Spuleneinheit der Bremseinrichtung und/oder insbesondere vor externen Magnetfeldern. Dabei umfasst die Abschirmeinrichtung wenigstens einen die Magnetringeinheit wenigstens abschnittsweise umgebenden Abschirmkörper. Die Abschirmeinrichtung umfasst insbesondere wenigstens eine zwischen dem Abschirmkörper und der Magnetringeinheit angeordnete Trenneinheit. Die Trenneinheit weist eine um ein Vielfaches geringere magnetische Leitfähigkeit als der Abschirmkörper auf. Dabei ist wenigstens eine Halteeinrichtung umfasst, welche die Abschirmeinrichtung wenigstens teilweise insbesondere drehfest an den Drehkörper anbindet. Dabei umfasst die Abschirmeinrichtung wenigstens eine zwischen dem Abschirmkörper und dem Drehkörper angeordnete magnetische Entkopplungseinrichtung. Die Entkopplungseinrichtung weist eine um ein Vielfaches geringere magnetische Leitfähigkeit als der Abschirmkörper auf. Die Entkopplungseinrichtung wird wenigstens teilweise durch die Halteeinrichtung bereitgestellt. Zusätzlich oder alternativ umfasst die Halteeinrichtung wenigstens eine sich zwischen dem Drehkörper und dem Abschirmkörper erstreckende Wegstrecke, welche wenigstens einem Viertel und vorzugsweise wenigstens der Hälfte eines maximalen Durchmessers einer elektrischen Spule der Spuleneinheit entspricht.

Die erfindungsgemäße Bremsvorrichtung bietet viele Vorteile. Einen erheblichen Vorteil bieten die Abschirmeinrichtung und auch die Halteeinrichtung. Dadurch kann die Sensoreinrichtung besonders wirkungsvoll und zugleich unaufwendig und bauraumsparend vor störenden Einflüssen abgeschirmt werden. Die Erfindung bietet daher eine erheblich verbesserte Erfassung der Drehposition.

Die Abschirmeinrichtung umfasst insbesondere wenigstens eine zwischen dem Abschirmkörper und dem Drehkörper angeordnete magnetische Entkopplungseinrichtung. Dabei weisen die Trenneinheit und/oder die Entkopplungseinrichtung vorzugsweise eine um ein Vielfaches geringere magnetische Leitfähigkeit (magnetische Permeabilität) als der Abschirmkörper auf.

Insbesondere wird die Entkopplungseinrichtung wenigstens teilweise durch die Halteeinrichtung bereitgestellt wird. Die Entkopplungseinrichtung kann vollständig durch die Halteeinrichtung bereitgestellt werden. Dann entspricht die Halteeinrichtung insbesondere der Entkopplungseinrichtung. Dann können die Begriffe Halteeinrichtung und Entkopplungseinrichtung insbesondere synonym verwendet und daher ausgetauscht werden. Die Halteeinrichtung kann die Entkopplungseinrichtung umfassen oder als solche ausgebildet sein. Die Entkopplungseinrichtung und die Halteeinrichtung können auch wenigstens teilweise separat ausgebildet sein. Die Entkopplungseinrichtung und die Halteeinrichtung können separate Bauteile sein.

Es ist möglich und vorteilhaft, dass die Halteeinrichtung wenigstens zweiteilig ausgebildet ist. Insbesondere umfasst die Halteeinrichtung dann wenigstens eine erste Haltekomponente, welche magnetisch leitfähig ausgebildet ist. Insbesondere umfasst die Halteeinrichtung dann wenigstens eine zweite Haltekomponente, welche magnetisch nicht leitfähig ausgebildet ist. Vorzugsweise weist die zweite Haltekomponente eine um ein Vielfaches geringere magnetische Leitfähigkeit (magnetische Permeabilität) als der Abschirmkörper auf. Insbesondere umfasst die zweite Haltekomponente die Entkopplungseinrichtung oder ist als solche ausgebildet. Die Halteeinrichtung kann wenigstens teilweise magnetisch leitfähig ausgebildet sein. Die Halteeinrichtung kann wenigstens teilweise magnetisch nicht leitfähig ausgebildet sein.

Insbesondere ist vorgesehen, dass die Halteeinrichtung wenigstens teilweise den Abschirmkörper und/oder die Trenneinheit und/oder die Magnetringeinheit und/oder die Entkopplungseinrichtung insbesondere drehfest an den Drehkörper anbindet.

Im Rahmen der vorliegenden Erfindung wird unter einem Bremsen bzw. Verzögern insbesondere eine Beaufschlagung mit einem (Dreh-) Moment verstanden. Dabei kann durch das Moment eine (Dreh-) Bewegung verzögert und insbesondere auch blockiert werden. Durch das Moment kann eine Drehbarkeit vorzugsweise auch aus einem Stillstand heraus gebremst und insbesondere blockiert werden. Insbesondere werden im Rahmen der vorliegenden Erfindung die Begriffe Bremsen und Verzögern synonym verwendet und können daher ausgetauscht werden.

Es ist möglich und vorteilhaft, dass der Drehkörper und/oder der Abschirmkörper und/oder die Entkopplungseinrichtung wenigstens teilweise einstückig mit der Halteeinrichtung verbunden sind. Der Drehkörper und/oder der Abschirmkörper und/oder die Entkopplungseinrichtung können auch separat zur Halteeinrichtung ausgebildet sein. Insbesondere ist die Trenneinheit separat zur Halteeinrichtung ausgebildet.

Möglich und vorteilhaft ist auch, dass der Drehkörper und/oder der Abschirmkörper und/oder die Trenneinheit und/oder die Entkopplungseinrichtung wenigstens teilweise an der Halteeinrichtung montiert sind. Dann sind die separaten Bauteile insbesondere an der Halteeinrichtung und/oder aneinander montierbar.

Die Halteeinrichtung kann wenigstens eine Befestigungseinrichtung aufweisen, welche zur Befestigung wenigstens eines Zusatzteils, insbesondere eines Zusatzteils einer Fingerwalze, ausgebildet ist. Das Zusatzteil ist insbesondere das nachfolgende näher beschriebene Zusatzteil.

In einer Weiterbildung umfasst die Halteeinrichtung wenigstens eine sich zwischen dem Drehkörper und dem Abschirmkörper erstreckende (insbesondere magnetisch leitfähige) Wegstrecke. Die Wegstrecke entspricht wenigstens einem Viertel und vorzugsweise wenigstens der Hälfte eines maximalen (insbesondere äußeren) Durchmessers einer elektrischen Spule der Spuleneinheit (insbesondere in einer radialen Richtung innerhalb der Spulenebene). Dadurch kann in bestimmten Anwendungsfällen auf die Entkopplungseinrichtung verzichtet werden, ohne dass eine unerwünschte Beeinflussung des Magnetfeldsensors auftritt. Je nach Geometrie der Halteeinrichtung kann z. B. eine Feldstärke eines betriebsgemäß im Drehkörper vorliegenden Magnetfeldes entlang der Wegstrecke bis zum Abschirmkörper um die Hälfte oder mehr reduziert werden. Die Wegstrecke verläuft insbesondere über einen hülsenartig ausgebildeten und eine zentrale radiale Ausnehmung umfassenden Teil der Halteeinrichtung.

In einer bevorzugten Ausgestaltung ist vorgesehen, dass die Bremsvorrichtung magnetorheologisch ausgebildet ist und zur Einstellung von Bedienzuständen wenigstens mittels Drehbewegungen dient. Die Bremsvorrichtung umfasst wenigstens eine Achseinheit. Die Bremsvorrichtung umfasst wenigstens einen Drehkörper. Der Drehkörper ist um die Achseinheit drehbar. Eine Drehbarkeit des Drehkörpers (relativ zu der Achseinheit) ist mittels wenigstens einer magnetorheologischen Bremseinrichtung gezielt bremsbar. Die Bremsvorrichtung umfasst wenigstens eine Sensoreinrichtung zur Erfassung einer Drehposition des Drehkörpers insbesondere in Bezug zu Achseinheit. Die Sensoreinrichtung umfasst wenigstens eine Magnetringeinheit und wenigstens einen Magnetfeldsensor zur Erfassung eines Magnetfeldes der Magnetringeinheit. Dabei umfasst die magnetorheologische Bremsvorrichtung wenigstens eine Abschirmeinrichtung zur wenigstens teilweisen Abschirmung der Sensoreinrichtung wenigstens vor einem Magnetfeld einer Spuleneinheit der Bremseinrichtung und/oder insbesondere vor externen Magnetfeldern. Dabei umfasst die Abschirmeinrichtung wenigstens einen die Magnetringeinheit wenigstens abschnittsweise umgebenden Abschirmkörper. Die Abschirmeinrichtung umfasst insbesondere wenigstens eine zwischen dem Abschirmkörper und der Magnetringeinheit angeordnete Trenneinheit. Die Abschirmeinrichtung umfasst wenigstens eine zwischen dem Abschirmkörper und dem Drehkörper angeordnete magnetische Entkopplungseinrichtung. Dabei weisen die Trenneinheit und/oder die Entkopplungseinrichtung eine um ein Vielfaches geringere magnetische Leitfähigkeit (magnetische Permeabilität) auf als der Abschirmkörper.

Insbesondere ist die Abschirmeinrichtung dazu geeignet und ausgebildet, ein Magnetfeld der Bremseinrichtung, insbesondere der Spuleneinheit, derart abzuschirmen, dass dieses nicht in die Sensoreinrichtung hinein streut und die Erfassung des Magnetfeldes der Magnetringeinheit ungünstig beeinflusst.

Insbesondere ist der Abschirmkörper nicht zwischen dem Magnetfeldsensor und der Magnetringeinheit angeordnet. Insbesondere ist der Abschirmkörper derart zwischen dem Magnetfeldsensor und der Magnetringeinheit angeordnet, dass der Abschirmkörper den Magnetfeldsensor nicht von dem zu erfassenden Magnetfeld der Magnetringeinheit (unerwünscht) abschirmt.

In einer vorteilhaften Ausgestaltung umgibt der Abschirmkörper die Magnetringeinheit wenigstens an einer radialen Außenseite wenigstens abschnittsweise. Bevorzugt und vorteilhaft ist auch, dass der Abschirmkörper die Magnetringeinheit wenigstens an wenigstens einer axialen Seite wenigstens abschnittsweise umgibt, welche der Spuleneinheit der Bremseinrichtung zugewandt ist. Insbesondere erstreckt sich der Abschirmkörper wenigstens entlang einer axialen Innenseite der Magnetringeinheit.

Insbesondere ist der Abschirmkörper als ein Abschirmring ausgebildet. Insbesondere weist der Abschirmring einen L-förmigen Querschnitt auf. Der Abschirmring kann auch einen U-förmigen Querschnitt aufweisen. Der Abschirmkörper kann auch als ein zylindrischer Ring ausgebildet sein. Möglich sind auch andere geeignete Geometrien, welche sich wenigstens teilweise um die Magnetringeinheit erstrecken. Der Abschirmring kann einstückig ausgebildet sein. Möglich ist auch eine mehrteilige Ausführung. Insbesondere ist die Magnetringeinheit dabei teilweise radial innerhalb des Abschirmrings angeordnet. Das bietet eine kompakte Anordnung und eine wirkungsvolle Abschirmung.

In einer bevorzugten und vorteilhaften Ausgestaltung umfasst die Trenneinheit wenigstens einen zwischen dem Abschirmkörper und der Magnetringeinheit verlaufenden Spalt. Insbesondere umfasst die Trenneinheit auch wenigstens ein im Spalt angeordnetes Füllmedium. Insbesondere ist das Füllmedium eine Vergussmasse zur nachträglichen Verfüllung des Spaltes. Insbesondere ist als Füllmedium wenigstens ein Kunststoff vorgesehen. Insbesondere ist das Füllmedium dazu geeignet und ausgebildet, den Abschirmkörper mit der Magnetringeinheit fest zu verbinden. Bevorzugt und vorteilhaft ist auch, dass als Füllmedium Luft vorgesehen ist.

In allen Ausgestaltungen ist bevorzugt, dass die Magnetringeinheit drehfest mit dem Drehkörper verbunden ist. Falls Luft als Füllmedium vorgesehen ist, kann zur drehfesten Verbindung der Magnetringeinheit mit dem Drehkörper wenigstens ein Verbindungselement und beispielsweise eine stirnseitige Scheibe oder dergleichen vorgesehen sein. Dabei weist das Verbindungselement in Bezug auf seine magnetische Permeabilität vorzugsweise die für die Trenneinheit beschriebenen magnetischen Eigenschaften auf.

Insbesondere ist das Füllmedium dazu geeignet und ausgebildet, die Magnetringeinheit mechanisch und vorzugsweise drehfest mit dem Abschirmkörper zu verbinden. Das ermöglicht eine besonders kompakte Bauweise, da zugleich eine Befestigung und eine Abschirmung erreicht werden. Insbesondere sind das Füllmedium und die Magnetringeinheit gegenüber der Achseinheit drehbar gelagert.

Insbesondere ist die Magnetringeinheit mittels der Trenneinheit und/oder des Abschirmkörpers drehfest mit der Halteeinrichtung und insbesondere mit der Entkopplungseinrichtung verbunden. Vorzugsweise ist die Halteeinrichtung, insbesondere die Entkopplungseinrichtung, dabei wenigstens mittelbar drehfest mit dem Drehkörper verbunden. So kann durch die Abschirmeinrichtung die Drehbewegung des Drehkörpers bauraumsparend und zuverlässig auf die Magnetringeinheit übertragen werden. Der Drehkörper kann von wenigstens einem Zusatzteil radial umgeben sein. Dabei kann die Halteeinrichtung, insbesondere die Entkopplungseinrichtung, über das Zusatzteil drehfest mit dem Drehkörper verbunden sein. Die Halteeinrichtung, insbesondere die Entkopplungseinrichtung, kann auch unmittelbar drehfest mit dem Drehkörper verbunden sein. Insbesondere sind die Magnetringeinheit und die Trenneinheit und der Abschirmkörper und die Entkopplungseinrichtung gegenüber der Achseinheit drehbar gelagert. Insbesondere ist die Halteeinrichtung gegenüber der Achseinheit drehbar gelagert.

In einer besonders vorteilhaften Ausgestaltung umfasst die Halteeinrichtung, insbesondere die Entkopplungseinrichtung, wenigstens eine Entkopplungshülse oder ist als eine solche ausgebildet. Insbesondere umgibt die Entkopplungshülse wenigstens die Achseinheit radial. Insbesondere ist die Entkopplungshülse wenigstens abschnittsweise axial benachbart zu dem Drehkörper angeordnet. Das bietet eine erhebliche Verbesserung der magnetischen Entkopplung. Es ist möglich, dass die Entkopplungshülse in axialer Richtung überlappend zu dem Drehkörper und/oder dem Zusatzteil angeordnet ist. Die Entkopplungshülse kann wenigstens teilweise durch die Halteeinrichtung bereitgestellt werden.

Vorzugsweise ist die Entkopplungshülse durch wenigstens einen Entkopplungsspalt von dem Drehkörper axial beabstandet. Insbesondere umfasst die Entkopplungseinrichtung sowohl die Entkopplungshülse als auch den Entkopplungsspalt. Im Entkopplungsspalt kann wenigstens ein Füllmedium angeordnet sein. Das Füllmedium ist vorzugsweise wie zuvor für die Trenneinheit beschrieben ausgebildet. Insbesondere stellt der Spalt eine magnetische Entkopplung zwischen der Entkopplungshülse und dem Drehkörper bereit. Möglich ist aber auch, dass die Entkopplungshülse berührend am Drehkörper anliegt oder befestigt ist.

Die Entkopplungshülse kann wenigstens abschnittsweise und insbesondere vollständig als ein separates Bauteil ausgebildet sein. Möglich und vorteilhaft ist auch, dass die Entkopplungshülse wenigstens abschnittsweise, insbesondere vollständig, durch wenigstens ein den Drehkörper radial umgebendes Zusatzteil bereitgestellt wird. Insbesondere ist die Entkopplungshülse einstückig mit dem Zusatzteil verbunden. Beispielsweise kann sich das Zusatzteil so weit in axialer Richtung erstrecken, dass es die Magnetringeinheit radial umgibt.

An der Halteeinrichtung, insbesondere an der Entkopplungseinrichtung und besonders bevorzugt an der Entkopplungshülse, ist vorzugsweise wenigstens eine Dichtungseinrichtung befestigt. Die Dichtungseinrichtung liegt insbesondere abdichtend an dem Drehkörper und/oder an dem Zusatzteil und/oder an der Achseinheit an. Insbesondere ist die Dichtungseinrichtung dazu geeignet und ausgebildet, einem Austreten eines in einem Aufnahmeraum angeordneten magnetorheologischen Mediums der Bremseinrichtung entgegenzuwirken. Durch eine solche Bauteilintegration kann die Bremsvorrichtung noch kompakter ausgeführt werden.

Insbesondere weist die Halteeinrichtung, insbesondere die Entkopplungseinrichtung und besonders bevorzugt die Entkopplungshülse, wenigstens eine Axialwand auf. Insbesondere erstreckt sich die Axialwand zwischen der Bremseinrichtung, insbesondere deren Spuleneinheit, und der Magnetringeinheit. Insbesondere ist an der Axialwand wenigstens ein Teil der Dichtungseinrichtung befestigt. Möglich und bevorzugt ist auch, dass an der Axialwand wenigstens eine Lagereinrichtung für die Drehbewegung des Drehkörpers gegenüber der Achseinheit befestigt ist. Beispielsweise werden die Abschirmeinrichtung und die daran drehfest gekoppelten Komponenten durch die Axialwand auf der Achseinheit abgestützt bzw. gelagert. Die Entkopplungshülse kann auch wenigstens eine weitere Axialwand aufweisen, welche ein äußeres Ende der Entkopplungshülse stirnseitig abschließt.

Vorzugsweise ist die Entkopplungshülse aus Kunststoff gefertigt. Möglich sind auch andere geeignete Werkstoffe insbesondere mit einer geringen magnetischen Leitfähigkeit.

Es ist möglich und bevorzugt, dass der Drehkörper nicht mehr als eine halbe axiale Breite eines Bremskörpers der Bremseinrichtung über den letzten axialen Bremskörper hinausragt. Insbesondere ragt der Drehkörper derartig über dasjenige axiale Ende hinaus, welches der Magnetringeinheit zugewandt ist. Insbesondere ragt der Drehkörper nicht über den letzten axialen Bremskörper an diesem axialen Ende hinaus. Der Drehkörper kann auch gegenüber dem letzten axialen Bremskörper zurückversetzt sein. Solche Ausgestaltungen können vorteilhafterweise auch an beiden axialen Enden oder an dem von der Magnetringeinheit gegenüberliegenden Ende vorgesehen. Eine derartige Verkürzung des Drehkörpers ist besonders vorteilhaft, um die Streuwirkung des Magnetfeldes der Bremseinrichtung in die Sensoreinrichtung weiter zu reduzieren.

In einer besonders vorteilhaften Ausgestaltung ist der Drehkörper von wenigstens einem Zusatzteil radial umgeben. Dabei ist der Drehkörper insbesondere wenigstens an demjenigen axialen Ende der Achseinheit gegenüber dem Zusatzteil axial zurückversetzt, an welchem die Magnetringeinheit angeordnet ist. Insbesondere ragt das Zusatzteil an diesem axialen Ende über den Drehkörper hinaus. Vorzugsweise ist der Drehkörper gegenüber dem Zusatzteil an beiden axialen Enden zurückversetzt. Insbesondere ist die axiale Länge des Drehkörpers geringer als die axiale Länge des Zusatzteils. Auch dadurch wird die magnetische Entkopplung weiter erheblich verbessert.

In allen Ausgestaltungen ist es besonders bevorzugt und vorteilhaft, dass der Abschirmkörper eine relative magnetische Permeabilität von wenigstens 1000 und vorzugsweise wenigstens 10.000 und besonders bevorzugt wenigstens 100.000 oder wenigstens 500.000 aufweist. Vorzugsweise weist der Abschirmkörper wenigstens die relative magnetische Permeabilität des Drehkörpers auf. Die hier beschriebenen magnetischen Eigenschaften des Abschirmkörper sind vorzugsweise auch für den Drehkörper vorgesehen.

Der Abschirmkörper umfasst insbesondere wenigstens einen ferromagnetischen und/oder wenigstens einen paramagnetischen Werkstoff oder besteht aus einem solchen. Vorzugsweise sind solche Werkstoffe auch für den Drehkörper vorgesehen.

In einer besonders vorteilhaften Ausgestaltung umfasst der Abschirmkörper wenigstens eine (insbesondere weichmagnetische) Nickel-Eisen-Legierung mit Nickel-Eisen-Legierung mit 60 % bis 90 % Nickel und Anteilen von Kupfer, Molybdän, Kobalt und/oder Chrom oder besteht aus einer solchen. Es kann auch ein Anteil von 69 % bis 82 % und vorzugsweise 72 % bis 80 % Nickel vorgesehen sein. Vorzugsweise ist eine solche Ausgestaltung auch für den Drehkörper vorgesehen. Besonders bevorzugt umfasst der Abschirmkörper und/oder der Drehkörper wenigstens ein µ-Metall oder bestehen aus einem solchen.

Es ist vorteilhaft und bevorzugt, dass die Entkopplungseinrichtung (insbesondere die Entkopplungshülse und/oder der Entkopplungsspalt) und/oder die Trenneinheit (insbesondere deren Füllmedium) und/oder wenigstens das Zusatzteil eine relative magnetische Permeabilität von maximal 1000 und vorzugsweise maximal 100 und besonders bevorzugt maximal zehn oder maximal zwei aufweisen. Bevorzugt und vorteilhaft ist auch, dass die zuvor genannten Komponenten eine relative magnetische Permeabilität von maximal einem Tausendstel der relativen magnetischen Permeabilität des Abschirmkörpers und/oder eine relative magnetische Permeabilität zwischen 1 und 2 aufweisen. Insbesondere umfassen die zuvor genannten Komponenten einen paramagnetischen Werkstoff oder bestehen aus einem solchen. Möglich und bevorzugt ist auch, dass die zuvor genannten Komponenten einen diamagnetischen Werkstoff umfassen oder aus einem solchen bestehen.

Die zuvor beschriebenen magnetischen Eigenschaften der Entkopplungseinrichtung sind vorzugsweise auch für die Achseinheit vorgesehen. So wird von der Achseinheit kein störendes Streufeld beim Magnetfeldsensor erzeugt. Beispielsweise ist die Achseinheit aus einem Kunststoff, insbesondere faserverstärkt, gefertigt.

Die Spuleneinheit der Bremseinrichtung kann in Bezug zur Achseinheit radial angeordnet sein. Möglich ist auch, dass die Spuleneinheit in Bezug zur Achseinheit axial angeordnet ist. In einer solchen axialen Anordnung erstreckt sich die Spuleneinheit mit ihrer Hauptebene insbesondere entlang einer Längsachse der Achseinheit.

Insbesondere umfasst die Sensoreinrichtung wenigstens einen drehfest an der Achseinheit angebundenen Magnetfeldsensor.

Insbesondere ist der Magnetfeldsensor radial und/oder axial benachbart zu wenigstens einer Magnetringeinheit angeordnet. Eine solche Ausgestaltung bietet viele Vorteile. Einen erheblichen Vorteil bietet die Anordnung des Magnetfeldsensors. Dadurch wird eine Bauraum sparende Unterbringung mit einer besonders kurzen Toleranzkette der Bauteile (geringe Summentoleranz bzw. wenige Bauteile zwischen der Sensorbefestigung und der Magnetbefestigung) und zugleich eine besonders zuverlässige sensorische Erfassung ermöglicht. Die Anbindung des Magnetfeldsensors an der Achseinheit bietet dabei eine besonders toleranzoptimierte Integration.

Vorzugsweise ist der Drehkörper als eine Fingerwalze und besonders bevorzugt als eine Daumenwalze ausgebildet. Bevorzugt ist der Drehkörper als ein zylindrisches Bauteil ausgebildet, welches mittels wenigstens eines Fingers in Rotation versetzt wird. Insbesondere ist die Bremsvorrichtung für eine Bedienung mit nur einem Finger vorgesehen. Insbesondere ist die Bremsvorrichtung dazu geeignet und ausgebildet, in einer liegenden Position bedient zu werden. Insbesondere nimmt die Drehachse des Drehkörpers dabei eine mehr horizontale als vertikale Stellung ein. Möglich ist aber auch, dass die Bremsvorrichtung stehend (vertikale Ausrichtung) bedienbar ist. Dabei wird die Bremsvorrichtung insbesondere meist mit zwei oder mehreren Fingern umfasst. Der Drehkörper kann auch als ein Drehknopf oder dergleichen ausgebildet sein und insbesondere wenigstens eine Drückfunktion und/oder Ziehfunktion (Push oder/und Pull) beinhalten. Durch diese Push/Pullfunktion können z.B. angewählte Menüs ausgewählt oder bestätigt werden.

Insbesondere weist der Drehkörper bzw. die Fingerwalze einen Durchmesser von weniger als 50 mm und vorzugsweise weniger als 20 mm und besonders bevorzugt weniger als 15 mm auf. Beispielsweise weist der Drehkörper einen Durchmesser von maximal 12 mm auf. Möglich und vorteilhaft für bestimmte Anwendungen sind aber auch größere oder kleinere Durchmesser für den Drehkörper.

In allen Ausgestaltungen ist es möglich und bevorzugt, dass der Drehkörper mit wenigstens einem Zusatzteil ausgestattet ist. Vorzugsweise umgibt das Zusatzteil den Drehkörper radial und vorzugsweise hülsenartig. Das Zusatzteil kann den Drehkörper auch an wenigstens einer Stirnseite verschließen. Insbesondere ist das Zusatzteil dazu als eine Zusatzhülse ausgebildet, welche an wenigstens einer axialen Stirnseite wenigstens teilweise und vorzugsweise vollständig verschlossen ist. Das betrifft insbesondere diejenige axiale Stirnseite der Zusatzhülse, welche an dem von der Magnetringeinheit abgewandten Ende der Achseinheit angeordnet ist. Dabei kann vorgesehen sein, dass der Drehkörper als ein an den Stirnseiten offen ausgebildetes hohlzylindrisches Hülsensteil ausgebildet ist.

Insbesondere ist das Zusatzteil als eine über den Drehkörper geschobene Zusatzhülse ausgebildet. Dabei kann das Zusatzteil lokale Außendurchmesservergrößerungen aufweisen. Beispielsweise weist die Zusatzhülse eine umlaufende Erhebung auf. Insbesondere dient das Zusatzteil zur Durchmesservergrößerung des Drehkörpers. Das Zusatzteil kann auch als ein Ring oder dergleichen ausgebildet sein oder wenigstens einen solchen umfassen. Das Zusatzteil kann zur Verbesserung der Haptik mit wenigstens einer Kontur versehen sein und insbesondere geriffelt und/oder gummiert oder dergleichen sein.

Die Magnetringeinheit ist vorzugsweise an einer axialen Stirnseite des Drehkörpers angeordnet. Das bietet eine besonders vorteilhafte Unterbringung der Magnetringeinheit. Die Magnetringeinheit kann unmittelbar an der axialen Stirnseite befestigt sein. Möglich ist aber auch, dass die Magnetringeinheit über wenigstens ein Verbindungselement an der axialen Stirnseite des Drehkörpers befestigt ist. Möglich ist auch, dass die Magnetringeinheit an der axialen Stirnseite des Drehkörpers angeordnet ist und über entsprechende Verbindungselemente an einer anderen Position der Bremsvorrichtung befestigt ist.

Es ist bevorzugt und vorteilhaft, dass die Magnetringeinheit den Magnetfeldsensor wenigstens abschnittsweise ringartig umgibt. Insbesondere ist die Magnetringeinheit radial um den Magnetfeldsensor herum angeordnet. Insbesondere ist der Magnetfeldsensor in axialer Richtung zentriert zu der Magnetringeinheit angeordnet. Darunter wird verstanden, dass der Magnetfeldsensor auf gleicher axialer Längsposition wie die Magnetringeinheit angeordnet ist. Der Magnetfeldsensor kann aber auch in axialer Richtung versetzt zu der Magnetringeinheit angeordnet sein. Im Rahmen der vorliegenden Erfindung beziehen sich solche Positionsangaben und insbesondere die Angaben "radial" und "axial" insbesondere auf eine Drehachse des Drehkörpers.

Bevorzugt und vorteilhaft ist auch, dass die Magnetringeinheit und der Magnetfeldsensor in einer koaxialen Weise zueinander angeordnet sind. Das bietet eine besonders Bauraum sparende Unterbringung auch bei besonders geringen Abmessungen und beispielsweise bei einer Daumenwalze. Insbesondere ist der Magnetfeldsensor dabei von der Magnetringeinheit umgeben. Dabei ist der Magnetfeldsensor insbesondere axial und/oder radial zu der Magnetringeinheit zentriert. Insbesondere weist der Magnetfeldsensor einen gezielten radialen Versatz zur Drehachse der Magnetringeinheit auf. Der Magnetfeldsensor kann aber auch wenigstens in axialer Richtung versetzt zu der Magnetringeinheit angeordnet sein.

Es kann vorgesehen sein, dass der Magnetfeldsensor versetzt zur Drehachse der Magnetringeinheit angeordnet ist. Das kann auch dann vorgesehen sein, wenn insgesamt eine zentrale Anordnung für den Magnetfeldsensor vorgesehen ist, beispielsweise wenn der Magnetfeldsensor innerhalb der Achseinheit angeordnet ist und von der Magnetringeinheit ringförmig umgeben ist. Durch einen gezielten Versatz des Magnetfeldsensors gegenüber der Drehachse der Magnetringeinheit ist eine verbesserte Drehwinkelmessung möglich. So kann beispielsweise auch bei nur zwei Polen der Magnetringeinheit jede Drehposition genau definiert und somit jeder Winkel möglichst genau gemessen werden. So ist ein Absolutwertgeber besonders unaufwendig umsetzbar.

In einer besonders bevorzugten Ausgestaltung ist der Magnetfeldsensor innerhalb der Achseinheit angeordnet. Das bietet eine besonders kompakte und zugleich toleranzoptimierte Unterbringung des Magnetfeldsensors. Die Achseinheit weist dazu insbesondere wenigstens eine Bohrung auf, in welcher der Magnetfeldsensor angeordnet ist. Im Rahmen der vorliegenden Erfindung werden unter einer Bohrung insbesondere auch alle geeigneten anderen Durchgangsöffnungen verstanden, unabhängig davon, ob diese mittels eines Bohrverfahrens hergestellt sind oder nicht. Die Bohrung verläuft insbesondere in Längsrichtung der Achseinheit. Die Bohrung ist insbesondere durchgehend ausgeführt oder kann auch als Sackloch ausgebildet sein.

Insbesondere ist der Magnetfeldsensor in der Achseinheit zentriert angeordnet. Insbesondere ist wenigstens ein aktiver Sensorabschnitt des Magnetfeldsensors innerhalb der Achseinheit angeordnet. Vorzugsweise ist der gesamte Magnetfeldsensor innerhalb der Achseinheit angeordnet. Im Rahmen der vorliegenden Erfindung beziehen sich die Positionsangaben für den Magnetfeldsensor insbesondere auf wenigstens den aktiven Sensorabschnitt.

Der Magnetfeldsensor ist vorzugsweise in der Bohrung der Achseinheit angeordnet, durch welche auch wenigstens eine elektrische Anbindung der Bremseinrichtung verläuft. Die elektrische Anbindung umfasst dabei insbesondere wenigstens eine Versorgungsleitung und/oder Steuerleitung für die Spuleneinheit. Das bietet eine vorteilhafte Ausnutzung des Bauraums und ermöglicht zugleich eine besonders unaufwendige Übermittlung der Sensorsignale. Insbesondere tritt die elektrische Anbindung stirnseitig aus der Achseinheit heraus.

Der Magnetfeldsensor ist insbesondere auf wenigstens einer Leiterplatte angeordnet. Die Leiterplatte ist beispielsweise ein Print oder umfasst wenigstens einen solchen. An der Leiterplatte ist vorzugsweise auch wenigstens die Bremseinrichtung, insbesondere die Spuleneinheit, elektrisch angebunden. An der Leiterplatte ist vorzugsweise auch wenigstens eine Anschlussleitung zur Kontaktierung der Bremsvorrichtung angebunden. Es ist bevorzugt und vorteilhaft, dass die Leiterplatte innerhalb der Achseinheit angeordnet ist. Bevorzugt ist auch, dass sich die Anschlussleitung aus der Achseinheit heraus erstreckt.

Insbesondere ist die Leiterplatte dabei in der zuvor beschriebenen Bohrung angeordnet. Insbesondere verläuft die Anschlussleitung durch die Bohrung. Insbesondere tritt die Anschlussleitung an einer Stirnseite aus der Achseinheit heraus. Das bietet eine besonders unaufwendige und zügige Montage und zugleich eine kompakte Unterbringung der entsprechenden Komponenten.

Die Anschlussleitung umfasst insbesondere wenigstens eine Steckereinheit. Beispielsweise ist eine Steckereinheit mit sechs oder acht Pins vorgesehen. So kann die Bremsvorrichtung besonders zügig und zugleich zuverlässig mit der zu bedienen Komponente und beispielsweise einer Fahrzeugelektronik verbunden werden. Durch Aufstecken des Steckers kann die Bedieneinheit auch in der Montageposition (z.B. Halter des Bedienteils) fixiert werden.

Vorzugsweise ist der Magnetfeldsensor in der Achseinheit vergossen und/oder mit wenigstens einem Werkstoff umspritzt. Insbesondere ist dazu die Bohrung wenigstens teilweise mit dem Werkstoff gefüllt. Besonders bevorzugt ist die Leiterplatte in der Achseinheit mit wenigstens einem Werkstoff umspritzt. Vorzugsweise ist ein Kunststoff oder ein anderer geeigneter Werkstoff vorgesehen. So können der Magnetfeldsensor bzw. die Leiterplatte zuverlässig vor äußeren Einflüssen geschützt und zugleich unaufwendig befestigt werden.

In einer vorteilhaften Ausgestaltung ist der Magnetfeldsensor an einem axialen Ende der Achseinheit stirnseitig und besonders bevorzugt stirnseitig zentriert angeordnet. Diese Unterbringung bietet Vorteile sowohl hinsichtlich der Sensorqualität als auch des Montageaufwands sowie des Bauraumbedarfs. Insbesondere ist der Magnetfeldsensor an derjenigen Stirnseite der Achseinheit angeordnet, welche innerhalb des Drehkörpers angeordnet ist. Dabei ist die Magnetringeinheit vorzugsweise außerhalb des Drehkörpers angeordnet. Die Magnetringeinheit kann aber auch innerhalb des Drehkörpers angeordnet sein. In einer solchen Ausgestaltung kann der Magnetfeldsensor in Bezug zur axialen Richtung versetzt zu der Magnetringeinheit angeordnet sein. Der Magnetfeldsensor kann aber auch auf gleicher axialer Längsposition wie die Magnetringeinheit worden sein.

Insbesondere ist der Magnetfeldsensor unmittelbar an der Achseinheit befestigt. Beispielsweise kann der Magnetfeldsensor mittels Umspritzen oder dergleichen mit der Achseinheit verbunden sein. Möglich ist aber auch, dass der Magnetfeldsensor mittels wenigstens eine Verbindungsstruktur an der Achseinheit befestigt ist. Der Magnetfeldsensor kann auch wenigstens teilweise in die Stirnseite Achseinheit eingelassen sein. Es es kann auch vorgesehen sein, dass der Magnetfeldsensor an einem axialen Ende der Achseinheit radial angeordnet ist.

Insbesondere umgibt die Magnetringeinheit die Achseinheit wenigstens abschnittsweise ringartig. Insbesondere ist die Magnetringeinheit radial um die Achseinheit angeordnet. Insbesondere ist die Magnetringeinheit in Bezug auf die Längsrichtung der Achseinheit derart angeordnet. Insbesondere sind die Magnetringeinheit und die Achseinheit in einer koaxialen Weise zueinander angeordnet. Dabei ist die Achseinheit vorzugsweise im Zentrum der Anordnung.

In einer vorteilhaften und bevorzugten Weiterbildung ist der Magnetfeldsensor zwischen der Magnetringeinheit und der Achseinheit angeordnet. Insbesondere ist der Magnetfeldsensor dann radial innerhalb der Magnetringeinheit angeordnet. Insbesondere umgibt die Magnetringeinheit den Magnetfeldsensor dann ringartig.

In einer anderen bevorzugten und ebenfalls vorteilhaften Weiterbildung ist die Magnetringeinheit zwischen dem Magnetfeldsensor und der Achseinheit angeordnet. Der Magnetfeldsensor ist dann insbesondere radial außerhalb der Magnetringeinheit angeordnet. Der Magnetfeldsensor und die Magnetringeinheit sind dann insbesondere radial übereinander angeordnet.

Es ist bevorzugt, dass der Drehkörper mittels wenigstens einer Lagereinrichtung auf der Achseinheit drehbar gelagert ist. Zum Beispiel umfasst die Lagereinrichtung wenigstens ein Wälzlager und/oder Gleitlager und/oder wenigstens ein Lager einer anderen geeigneten Bauweise. Insbesondere sind auch die anderen drehbaren Komponenten und beispielsweise die Magnetringeinheit und/oder der Abschirmkörper und/oder die Entkopplungseinrichtung mittels der wenigstens einen Lagereinrichtung auf der Achseinheit drehbar gelagert.

Die Bremseinrichtung umfasst vorzugsweise wenigstens eine Keillagereinrichtung. Der Bremseinrichtung kann auch wenigstens eine Keillagereinrichtung zugeordnet sein. Die Keillagereinrichtung umfasst insbesondere wenigstens einen und vorzugsweise eine Mehrzahl von Bremskörpern. Die Bremskörper sind insbesondere als Wälzkörper ausgebildet. Es können zylindrische und/oder kugelförmige Bremskörper vorgesehen sein. Die Keillagereinrichtung ist dabei insbesondere als ein Wälzlager ausgebildet oder umfasst wenigstens ein solches.

Die Bremseinrichtung ist insbesondere dazu geeignet und ausgebildet, mittels der Keillagereinrichtung und der Spuleneinheit und des magnetorheologischen Mediums die Drehbarkeit des Drehkörpers gezielt zu dämpfen und/oder zu verzögern und/oder zu blockieren. Die Bremseinrichtung ist insbesondere dazu geeignet und ausgebildet, mittels der Keillagereinrichtung und der Spuleneinheit und des magnetorheologischen Mediums ein Moment für die Drehbarkeit des Drehkörpers nach einer Verzögerung bzw. Blockierung auch wieder gezielt zu reduzieren.

Dabei ist die Keillagereinrichtung, insbesondere deren Wälzlager und bevorzugt dessen Bremskörper, vorzugsweise axial zwischen der Magnetringeinheit und der Bremseinrichtung, insbesondere einer Spuleneinheit der Bremseinrichtung, angeordnet. So ergibt sich eine besonders vorteilhafte Beabstandung der Magnetringeinheit zum Magnetfeld der Spuleneinheit.

Die Dämpfung erfolgt insbesondere über den sogenannten Keileffekt, welcher schon in früheren Patentanmeldungen der Anmelderin offenbart wurde (z. B. in DE 10 2018 100 390.0). Dazu befinden sich Bremskörper im Drehkörper benachbart zur Spuleneinheit und Achseneinheit. Die Bremskörper werden von magnetorheologischer Flüssigkeit umgeben. Das Magnetfeld der Spuleneinheit tritt über das Gehäuse des Drehkörpers durch die Walzkörper durch und schließt über die Achseneinheit. Dabei bilden sich im magnetorheologischen Fluid Keile aus, die die Bewegung der Bremskörper und somit des Drehkörpers bremsen. Die Bremskörper können Kugeln, zylindrische Walzen oder andere Teile sein.

Der Magnetfeldsensor ist insbesondere axial zwischen der Keillagereinrichtung und der Magnetringeinheit angeordnet. Der Magnetfeldsensor kann auch axial zwischen der Spuleneinheit und der Magnetringeinheit angeordnet sein.

Die Magnetringeinheit ist insbesondere axial zwischen der Keillagereinrichtung und dem Magnetfeldsensor angeordnet. Die Magnetringeinheit kann axial zwischen der Spuleneinheit und dem Magnetfeldsensor angeordnet sein. Solche Ausführungen ermöglichen eine kompakte Bauweise und zugleich eine vorteilhafte Erfassungsqualität.

Es ist möglich, dass der Magnetfeldsensor und insbesondere auch die Magnetringeinheit an derjenigen Stirnseite des Drehkörpers angeordnet sind, an welcher auch eine Stirnseite der Achseinheit liegt, aus welcher wenigstens eine Signalleitung des Magnetfeldsensors austritt, sodass die Signalleitung nicht durch ein Magnetfeld der Bremseinrichtung verläuft. Das hat den Vorteil, dass die Signale des Magnetfeldsensors nicht durch das Magnetfeld der Spuleneinrichtung gestört werden. Insbesondere ist auch die Anschlussleitung der Bremsvorrichtung an dieser Stirnseite angeordnet.

Es ist auch möglich, dass der Magnetfeldsensor und insbesondere auch die Magnetringeinheit an derjenigen Stirnseite des Drehkörpers angeordnet sind, welche eine Stirnseite der Achseinheit gegenüberliegt, aus welcher wenigstens eine Signalleitung des Magnetfeldsensors austritt. In einer solchen Ausgestaltung erfolgt eine Signalübertragung in der Signalleitung vorzugsweise optisch. So werden die Signale des Magnetfeldsensors trotz des Hindurchtretens durch das Magnetfeld der Spuleneinrichtung nicht ungünstig gestört. Insbesondere erfolgt die Signalübertragung wenigstens dort optisch, wo die Signalleitung durch das Magnetfeld der Spuleneinrichtung verläuft. Insbesondere umfasst die Signalleitung wenigstens abschnittsweise wenigstens einen Lichtwellenleiter oder ist als ein solcher ausgebildet. Insbesondere verläuft die Signalleitung wenigstens abschnittsweise durch die Bohrung in der Achseinheit.

Die Signalleitung wird vorzugsweise wenigstens abschnittsweise durch wenigstens eine Bohrung in der Achseinheit bereitgestellt.

Vorzugsweise dient die Achseinheit selbst als Lichtwellenleiter. Die Bohrung ist insbesondere die zuvor beschriebene Bohrung. In einer solchen Ausführung ist der Magnetfeldsensor insbesondere stirnseitig an der Achseinheit oder innerhalb der Achseinheit angeordnet.

In allen Ausgestaltungen ist es besonders bevorzugt, dass die Magnetringeinheit und/oder der Magnetfeldsensor innerhalb einer durch den Drehkörper begrenzten Umfangslinie angeordnet sind. Insbesondere stehen die Magnetringeinheit und/oder der Magnetfeldsensor nicht über den Umfang des Drehkörpers hinaus. Insbesondere sind die Magnetringeinheit und der Magnetfeldsensor radial innerhalb von der Umfangslinie des Drehkörpers angeordnet. Insbesondere wird die Umfangslinie dabei durch den Drehkörper selbst und nicht durch ein auf dem Drehkörper angeordnetes Zusatzteil begrenzt.

Es ist möglich, dass die Magnetringeinheit außerhalb eines von dem Drehkörper begrenzten Aufnahmeraums angeordnet ist. Dabei ist insbesondere zwischen der Magnetringeinheit und dem Drehkörper wenigstens eine Dichtungseinrichtung angeordnet. Insbesondere liegt die Dichtungseinrichtung abdichtend an dem Drehkörper und der Achseinheit an, um das Austreten eines im Aufnahmeraum angeordneten magnetorheologischen Mediums zu verhindern. Die Dichtungseinrichtung umfasst insbesondere wenigstens einen Dichtabschnitt, welcher an der Achseinheit anliegt. Die Dichtungseinrichtung umfasst insbesondere wenigstens einen Dichtabschnitt, welcher an dem Drehkörper anliegt. Die Dichtungseinrichtung umfasst wenigstens eine Schleifdichtung oder ist als eine solche ausgebildet. Möglich ist aber auch, dass die Magnetringeinheit innerhalb des Aufnahmeraums angeordnet ist.

Vorzugsweise ist zwischen der Magnetringeinheit und der Bremseinrichtung, insbesondere deren Spuleneinheit, wenigstens eine insbesondere magnetisch leitfähige Wandung angeordnet. Insbesondere ist die Wandung dazu geeignet und ausgebildet, ein Magnetfeld der Magnetringeinheit derart abzuschirmen, dass dieses nicht in die Bremseinrichtung und/oder den Aufnahmeraum hinein streut und dadurch das magnetorheologische Medium ungünstig beeinflusst.

Die Wandung umfasst dazu insbesondere einen ferromagnetischen und/oder paramagnetischen Werkstoff oder besteht aus einem solchen. Die Wandung kann auch einen diamagnetischen Werkstoff umfassen oder aus einem solchen bestehen. Es ist möglich, dass der Drehkörper aus einem solchen Werkstoff gefertigt ist. Beispielsweise ist als Werkstoff eine Nickel-Eisen-Legierung mit z. B. 69-82% Nickel vorgesehen. Möglich sind auch andere das Magnetfeld abschirmende Metalle (sog. µ-Metalle). Insbesondere weist die Wandung eine relative magnetische Permeabilität von wenigstens 1000 und vorzugsweise wenigstens 10.000 und besonders bevorzugt wenigstens 100.000 oder wenigstens 500.000 auf.

Die Wandung wird vorzugsweise wenigstens teilweise durch eine Stirnwand des Drehkörpers bereitgestellt. Das ist insbesondere eine geschlossene Stirnwand, durch welche sich die Achseinheit nicht erstreckt. Dann ist die Wandung insbesondere einstückig mit dem Drehkörper ausgebildet.

Möglich und bevorzugt ist auch, dass die Wandung eine offen ausgebildete Stirnseite des Drehkörpers wenigstens teilweise verschließt. Dann ist es bevorzugt, dass sich die Achseinheit durch die Wandung erstreckt. Dann weist die Wandung insbesondere wenigstens eine Durchgangsöffnung für die Achseinheit auf. Möglich und vorteilhaft ist auch, dass die Wandung als eine Tragstruktur für die Dichtungseinrichtung ausgebildet ist. Insbesondere sind an der Wandung jeweils wenigstens ein Dichtabschnitt für die Achseinheit und den Drehkörper befestigt. In solchen Ausführungen ist die Wandung insbesondere an der Achseinheit befestigt.

Es ist möglich, dass der Magnetfeldsensor innerhalb eines von dem Drehkörper begrenzten Aufnahmeraums angeordnet ist. Der Drehkörper stellt insbesondere einen Aufnahmeraum bereit oder begrenzt einen solchen wenigstens teilweise. Insbesondere ist der Magnetfeldsensor mittels wenigstens einer Dichtungseinheit von einem im Aufnahmeraum angeordneten magnetorheologischen Medium getrennt. Die Dichtungseinheit umfasst insbesondere wenigstens einen radial um die Achseinheit verlaufenden Dichtring (O-Ring) oder dergleichen. Die Dichtungseinheit liegt insbesondere abdichtend an dem Drehkörper und der Achseinheit an.

Insbesondere ist der Magnetfeldsensor dann in einer stirnseitigen Ausbuchtung des Drehkörpers angeordnet. Insbesondere liegt die Magnetringeinheit dann außerhalb des Drehkörpers. Die Ausbuchtung ist insbesondere zentriert an der Stirnseite angeordnet. In einer solchen Ausgestaltung ist der Magnetfeldsensor insbesondere stirnseitig an der Achseinheit angeordnet. Die Ausbuchtung ist insbesondere an der Stirnseite des Drehkörpers angeordnet, aus welcher die Achseinheit nicht heraustritt. Der Magnetfeldsensor kann auch außerhalb des Drehkörpers angeordnet sein.

In einer vorteilhaften Weiterbildung der erfindungsgemäßen Bremsvorrichtung oder einer Bremsvorrichtung nach dem Oberbegriff von Anspruch 1 ist vorzugsweise vorgesehen, dass die Sensoreinrichtung dazu geeignet und ausgebildet ist, zusätzlich zu der Drehposition des Drehkörpers auch wenigstens eine axiale Position des Drehkörpers in Bezug zur Achseinheit zu erfassen.

Insbesondere ist der Magnetfeldsensor dann als ein dreidimensionaler Magnetfeldsensor ausgebildet. Insbesondere erfolgt die Erfassung der axialen Position mittels der Magnetringeinheit. Insbesondere erfolgt die Erfassung der axialen Position mittels einer axialen Position der Magnetringeinheit relativ zum Magnetfeldsensor. Eine solche Ausgestaltung ist besonders vorteilhaft für eine Bremsvorrichtung, bei der auch mittels Druckbewegungen die Bedienzustände eingestellt werden.

Insbesondere ist die Bremsvorrichtung dazu geeignet und ausgebildet, Bedienzustände auch mittels wenigstens einer Druckbewegung einzustellen. Die Druckbewegung erfolgt insbesondere in Richtung der Drehachse für die Drehbewegung des Drehkörpers.

Zur Erfassung der axialen Position des Drehkörpers in Bezug zur Achseinheit ist vorzugsweise vorgesehen, dass die Magnetringeinheit in Magnetfeldsensor wenigstens abschnittsweise ringartig umgibt. Dabei ist der Magnetfeldsensor vorzugsweise mit einem axialen Versatz zum axialen Zentrum der Magnetringeinheit angeordnet. Das ermöglicht eine besonders präzise bzw. hochauflösende Erfassung der axialen Position. Zugleich kann darüber auch zuverlässig die axiale Bewegungsrichtung erkannt werden. Insbesondere ist der Magnetfeldsensor radial zentriert in Bezug zur Magnetringeinheit angeordnet.

Vorzugsweise ist die Sensoreinrichtung dazu geeignet und ausgebildet, die axiale Position des Drehkörpers in Bezug zur Achseinheit aus der vom Magnetfeldsensor erfassten Intensität des Magnetfeldes der Magnetringeinheit zu ermitteln. Insbesondere ist die Sensoreinrichtung dazu geeignet und ausgebildet, eine axiale Bewegungsrichtung des Drehkörpers in Bezug zur Achseinheit aus einem Vorzeichen einer Änderung der Intensität des Magnetfeldes der Magnetringeinheit zu ermitteln. Möglich ist aber auch, dass der Magnetfeldsensor im axialen Zentrum der Magnetringeinheit angeordnet ist.

Insbesondere ist die Achseinheit feststehend ausgebildet. Insbesondere stellt die Achseinheit eine Tragstruktur für daran aufgenommene Komponenten und insbesondere für den daran gelagerten Drehkörper und/oder für die Bremseinrichtung und/oder für die Sensoreinrichtung bereit. Es kann vorgesehen sein, dass die Achseinheit in einem bestimmungsgemäß montierten Zustand der Bremsvorrichtung an wenigstens einer Konsole oder dergleichen angebunden ist. Insbesondere umfasst die Achseinheit wenigstens eine Achse, insbesondere Hohlachse, oder ist als eine solche ausgebildet. Insbesondere stellt eine Längsachse der Achseinheit die Drehachse des Drehkörpers bereit. Insbesondere sind die Achseinheit und der Drehkörper in einer koaxialen Weise zueinander angeordnet.

Der Drehkörper ist insbesondere hülsenartig ausgebildet. Der Drehkörper besteht insbesondere aus einem magnetisch leitenden Material und vorzugsweise aus einem metallischen und besonders bevorzugt aus einem ferromagnetischen Werkstoff. Insbesondere umfasst der Drehkörper wenigstens eine Drehhülse oder ist als eine solche ausgebildet. Die Drehhülse kann auch als Hülsenteil bezeichnet werden. Der Drehkörper ist insbesondere als ein Drehknopf ausgebildet. Insbesondere ist der Drehkörper zylindrisch ausgebildet. Der Drehkörper weist insbesondere zwei Stirnseiten und eine sich dazwischen erstreckende zylindrische Wandung auf. Dabei weist der Drehkörper vorzugsweise wenigstens eine verschlossene Stirnseite auf. Möglich ist auch, dass beide Stirnseiten wenigstens teilweise verschlossen sind. Möglich und vorteilhaft ist auch, dass beide Stirnseiten wenigstens teilweise offen ausgebildet sind. Bevorzugt und vorteilhaft ist auch, dass der Drehkörper als ein an den Stirnseiten offen ausgebildetes hohlzylindrisches Hülsensteil ausgebildet ist. Dabei weist das Hülsensteil insbesondere eine axiale Länge auf, welche sich wenigstens über die Spuleneinheit und/oder die Keillagereinrichtung, insbesondere deren Bremskörper, erstreckt. Insbesondere ist der Drehkörper einstückig ausgebildet, wobei insbesondere die zylindrische Wandung mit wenigstens einer Stirnwandung einstückig verbunden ist.

Insbesondere erstreckt sich die Achseinheit in den Drehkörper und vorzugsweise in dessen Aufnahmeraum. Insbesondere ist der Drehkörper derart ausgebildet und auf der Achseinheit angeordnet, dass sich die Achseinheit an einer offenen Stirnseite aus dem Drehkörper heraus erstreckt. Dabei ist insbesondere die andere Stirnseite des Drehkörpers verschlossen.

Die Bremseinrichtung umfasst insbesondere wenigstens eine ansteuerbare Spuleneinheit zur Erzeugung eines gezielten Magnetfeldes. Die Bremseinrichtung und vorzugsweise wenigstens die Spuleneinheit sind insbesondere drehfest an der Achseinheit angeordnet.

Die Bremseinrichtung umfasst insbesondere wenigstens ein magnetorheologisches Medium. Das Medium ist insbesondere ein Fluid, welches vorzugsweise als Träger für Partikel eine Flüssigkeit umfasst. In dem Fluid sind insbesondere magnetische und vorzugsweise ferromagnetische Partikel vorhanden. Möglich ist auch, dass das Medium lediglich Partikel umfasst und auf das Trägermedium verzichtet wird (Vakuum).

Insbesondere ist die Bremseinrichtung in Abhängigkeit wenigstens eines von der Sensoreinrichtung erfassten Signals ansteuerbar. Vorzugsweise ist eine Steuereinrichtung zur Ansteuerung der Bremseinrichtung in Abhängigkeit der Sensoreinrichtung vorgesehen. Insbesondere ist die Steuereinrichtung dazu geeignet und ausgebildet, in Abhängigkeit des Signals der Sensoreinrichtung ein gezieltes Magnetfeld mit der Spuleneinheit zu erzeugen. Die Bremseinrichtung ist insbesondere auch eine Dämpfereinrichtung.

Insbesondere ist für das Medium wenigstens ein Aufnahmeraum vorgesehen. Insbesondere wird der Aufnahmeraum durch den Drehkörper bereitgestellt oder wenigstens teilweise begrenzt. Insbesondere wird der Aufnahmeraum auch durch das Zusatzteil und/oder die Achseinheit wenigstens teilweise begrenzt. Es ist möglich, dass in dem Aufnahmeraum weitere Komponenten und beispielsweise die Keillagereinrichtung und/oder die Spuleneinheit und/oder der Magnetfeldsensor und/oder die Magnetringeinheit angeordnet sind. Es ist möglich, dass der Aufnahmeraum in gegeneinander abgedichtete Teilräume unterteilt ist. Vorzugsweise ist ein Teilraum für das magnetorheologische Medium vorgesehen. Insbesondere ist der Magnetfeldsensor in einem anderen Teilraum bzw. nicht in dem Teilraum mit dem Medium angeordnet.

Insbesondere umfasst die Bremsvorrichtung, insbesondere die Bremseinrichtung, wenigstens eine Keillagereinrichtung und vorzugsweise wenigstens ein Wälzlager. Insbesondere ist die Keillagereinrichtung, vorzugsweise deren Bremskörper, von dem Medium (direkt) umgeben. Vorzugweise umfasst die Bremsvorrichtung wenigstens eine Dichtungseinrichtung und/oder wenigstens eine Dichteinheit, um ein Austreten des Mediums aus dem Aufnahmeraum zu verhindern. Insbesondere ist der Aufnahmeraum gegenüber dem Drehkörper und der Achseinheit abgedichtet. Die Keillagereinrichtung umgibt die Achseinheit insbesondere radial.

Die Sensoreinrichtung ist insbesondere als ein Absolutwertgeber ausgebildet. Die Sensoreinrichtung kann auch als ein Inkrementalgeber oder als eine andere geeignete Bauart ausgebildet sein. Die Sensoreinrichtung ist insbesondere mit der Steuereinrichtung und/oder der Bremseinrichtung wirkverbunden.

Die Magnetringeinheit ist insbesondere ringförmig geschlossen ausgebildet. Die Magnetringeinheit kann auch ringförmig offen ausgebildet sein. Insbesondere umfasst die Magnetringeinheit wenigstens einen Permanentmagnet oder ist als ein solcher ausgebildet. Insbesondere stellt die Magnetringeinheit wenigstens einen magnetischen Nordpol und wenigstens einem magnetischen Südpol bereit. Der Magnetringeinheit ist insbesondere wenigstens eine Abschirmeinrichtung zur Abschirmung ihres Magnetfeldes von dem Magnetfeld der Spuleneinheit zugeordnet. Die Abschirmeinrichtung umfasst insbesondere die zuvor beschriebene Wandung oder wird durch diese bereitgestellt.

Der Magnetfeldsensor ist insbesondere dazu geeignet und ausgebildet, die Ausrichtung des Magnetfeldes der Magnetringeinheit zu erfassen. Insbesondere ist der Magnetfeldsensor als ein Hall-Sensor ausgebildet oder umfasst wenigstens einen solchen. Möglich sind auch andere geeignete Sensortypen zur Erfassung des Magnetfeldes der Magnetringeinheit.

Eine für die Verwendung mit der Erfindung geeignete Bremseinrichtung wird auch in der Patentanmeldung DE 10 2018 100 390.0 beschrieben. Die gesamte Offenbarung der DE 10 2018 100 390.0 wird hiermit Teil des Offenbarungsgehalts der vorliegenden Anmeldung.

Die Anmelderin behält sich vor, eine Computermaus mit wenigstens einer Bremsvorrichtung zu beanspruchen, wie sie zuvor beschrieben wurde. Dabei stellt die Bremsvorrichtungen insbesondere ein Mausrad der Computermaus oder eines ähnlichen Eingabegerätes bereit.

Insbesondere ist zwischen dem Drehkörper und der Achseinheit wenigstens eine geschlossene (und nach außen abgedichtete) Kammer ausgebildet. Insbesondere ist der Drehkörper an einem ersten Ende der geschlossenen Kammer an der Achseinheit (an einer ersten Lagerstelle) drehbar aufgenommen (gelagert). Insbesondere ist die geschlossene Kammer im Wesentlichen (vollständig) mit einem magnetorheologischen Medium gefüllt.

Insbesondere ist der Drehkörper axial verschiebbar an der Achseinheit aufgenommen (gelagert), sodass sich ein Volumen der geschlossenen Kammer durch eine relative axiale Verschiebung des Drehkörpers zur Achseinheit verändert, um einen Ausgleich für temperaturbedingte Volumenänderungen zur Verfügung zu stellen.

Insbesondere ist an einem zweiten Ende der Kammer der Drehkörper an der Achseinheit verschiebbar aufgenommen (gelagert). Insbesondere ist ein Durchmesser der ersten Lagerstelle an dem ersten Ende der geschlossenen Kammer von einem Durchmesser der zweiten Lagerstelle an dem zweiten Ende der geschlossenen Kammer verschieden.

Insbesondere ist ein fest stehender Halter umfasst. Insbesondere ist die Achseinheit mit dem Halter drehfest verbunden und erstreckt sich in axialer Richtung. Insbesondere umfasst der Drehkörper ein sich um die Achseinheit herum drehbares und hohl (und innen zylindrisch) ausgebildetes Drehteil. Insbesondere ist zwischen der Achseinheit und dem Drehkörper ein umlaufender Spalt ausgebildet. Insbesondere ist der Spalt wenigstens zum Teil mit einem magnetorheologischen Medium gefüllt.

Insbesondere umfasst die Achseinheit einen sich in der axialen Richtung erstreckenden Kern aus einem magnetisch leitfähigen Material und eine elektrische Spule (Spuleneinheit). Insbesondere ist die Spule in axialer Richtung um den Kern gewickelt ist und spannt insbesondere eine Spulenebene auf, sodass sich ein Magnetfeld der elektrischen Spule quer (zu der axialen Richtung) durch die Achseinheit erstreckt. Insbesondere ist ein maximaler (äußerer) Durchmesser der elektrischen Spule in einer radialen Richtung innerhalb der Spulenebene größer ist als ein minimaler (äußerer) Durchmesser des Kerns in einer radialen Richtung quer (senkrecht) zu der Spulenebene.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Figur 1: eine rein schematische Darstellung einer Bremsvorrichtung in einer geschnittenen Seitenansicht;
- Fig. 2-7a: rein schematische Darstellungen weiterer Bremsvorrichtungen in geschnittenen Seitenansichten;
- Fig. 7b-7d: Detailansichten der Bremsvorrichtung der Fig. 7a;
- Fig. 7e: eine schematische Darstellung eines Verlaufs eines Sensorsignals;
- Fig. 8a-8e: schematische dreidimensionale Ansichten von Bremsvorrichtungen; und
- Fig. 9a-9c: mögliche Drehmomentverläufe über dem Drehwinkel.

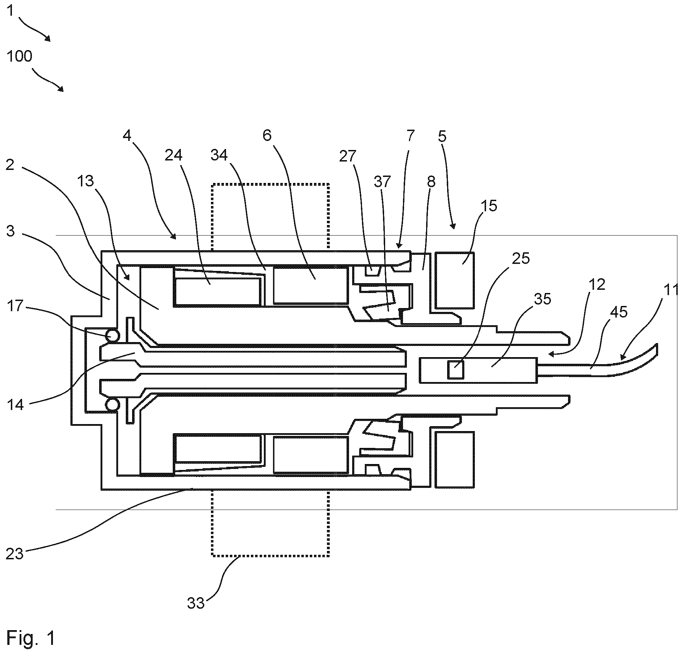

Figur 1 zeigt eine Bremsvorrichtung 1, welche hier als Bedieneinrichtung 100 ausgebildet ist und einen drehbaren und als Fingerwalze 23 bzw. Daumenwalze ausgebildeten Drehkörper 3 zur Einstellung von Bedienzuständen aufweist. Die Bedienung erfolgt hier also wenigstens durch Drehen des Drehkörpers 3.

Der Drehkörper 3 ist mittels einer hier nicht näher gezeigten Lagereinrichtung 22 auf einer Achseinheit 2 drehbar gelagert. Der Drehkörper 3 kann auch mittels einer hier als Wälzlager ausgebildeten Keillagereinrichtung 6 auf einer Achseinheit 2 drehbar gelagert sein. Bevorzugt ist die Keillagereinrichtung 6 jedoch nicht oder nur teilweise für die Lagerung des Drehkörpers 3 auf der Achseinheit vorgesehen, sondern dient für die nachfolgend vorgestellte Bremseinrichtung 4. Dabei dienen die Wälzkörper hier als Bremskörper 44.

Die Achseinheit 2 kann an einem zu bedienenden Objekt und beispielsweise in einem Innenraum eines Kraftfahrzeugs oder an einem Medizingerät oder Smart Device montiert werden. Dazu kann die Achseinheit 2 hier nicht näher dargestellte Montagemittel aufweisen.

Es kann hier oder in den nachfolgenden Ausgestaltungen vorgesehen sein, dass der Drehkörper 3 auch in Längsrichtung bzw. entlang der Drehachse auf der Achseinheit 2 verschiebbar ist. Dann erfolgt eine Bedienung sowohl über das Drehen als auch ein Drücken und/oder Ziehen bzw. Verschieben des Drehknopfs 3.

Der Drehkörper 3 ist hier hülsenartig ausgebildet und umfasst eine zylindrische Wand und eine einstückig damit verbundene Stirnwand. An einer offenen Stirnseite des Drehkörpers 3 tritt die Achseinheit 2 heraus.

Die Fingerwalze 23 kann mit einem hier gestrichelt angedeuteten Zusatzteil 33 ausgestattet sein. Dadurch wird eine Durchmesservergrößerung erreicht, sodass die Drehbarkeit erleichtert wird, zum Beispiel bei einem mit einem Finger drehbaren Rad einer Computermaus oder Gamecontroller oder einem Drehrad bei einer Computertastatur-Daumenwalze.

Die Drehbewegung des Drehknopfs 3 ist hier durch eine in einem Aufnahmeraum 13 im Inneren des Drehknopfs 3 angeordnete magnetorheologische Bremseinrichtung 4 gedämpft. Die Bremseinrichtung 4 erzeugt mit einer Spuleneinheit 24 ein Magnetfeld, das auf ein im Aufnahmeraum 13 befindliches magnetorheologisches Medium 34 einwirkt. Das führt zu einer lokalen und starken Vernetzung von magnetisch polarisierbaren Partikeln im Medium 34. Die Bremseinrichtung 4 ermöglicht dadurch eine gezielte Verzögerung und sogar ein vollständiges Blockieren der Drehbewegung. So kann mit der Bremseinrichtung 4 eine haptische Rückkopplung während der Drehbewegung des Drehkörpers 3 erfolgen, beispielsweise durch eine entsprechend wahrnehmbare Rasterung bzw. durch dynamisch einstellbare Anschläge.

Zur Versorgung und Ansteuerung der Spuleneinheit 24 umfasst die Bremseinrichtung 4 hier eine elektrische Anbindung 14, welche beispielsweise in der Art einer Leiterplatte bzw. Prints oder als Kabelleitung ausgebildet ist. Die Anschlussleitung 11 erstreckt sich hier durch eine in Längsrichtung der Achseinheit 2 verlaufende Bohrung 12.

Der Aufnahmeraum 13 ist hier mit einer Dichtungseinrichtung 7 und einer Dichtungseinheit 17 nach außen abgedichtet, um ein Austreten des Mediums 34 zu verhindern. Dabei verschließt die Dichtungseinrichtung 7 die offene Stirnseite des Drehkörpers 3. Dazu liegt ein erstes Dichtteil 27 an der Innenseite des Drehkörpers 3 an. Ein zweites Dichtteil 37 liegt an der Achseinheit 3 an. Die Dichtteile 27, 37 sind hier an einer als Wandung 8 ausgebildeten Tragstruktur befestigt.

Die Dichtungseinheit 17 ist hier als O-Ring ausgebildet und umgibt die Achseinheit 3 radial. Die Dichtungseinheit 17 liegt an der Achseinheit 2 und dem Drehkörper 3 an. Dadurch wird der mit dem Medium 34 befüllte Teil des Aufnahmeraums 13 gegenüber einem anderen Teil des Aufnahmeraums 13 abgedichtet.

Um die Drehposition des Drehkörpers 3 zu überwachen zur Ansteuerung der Bremseinrichtung 4 einsetzen zu können, ist hier eine Sensoreinrichtung 5 vorgesehen. Die Sensoreinrichtung 5 umfasst eine Magnetringeinheit 15 und einen Magnetfeldsensor 25.

Die Magnetringeinheit 15 ist hier diametral polarisiert und weist einen Nordpol und einen Südpol auf. Der hier als Hall-Sensor ausgebildete Magnetfeldsensor 25 misst das von der Magnetringeinheit 15 ausgehende Magnetfeld und ermöglicht so eine zuverlässige Bestimmung des Drehwinkels.

Zudem ist der Magnetfeldsensor 25 hier bevorzugt dreidimensional ausgebildet, sodass zusätzlich zur Rotation auch eine axiale Verschiebung des Drehkörpers 3 gegenüber der Achseinheit 2 gemessen werden kann. Dadurch können sowohl die Drehung als auch eine Druckknopf-Funktion (Push/Pull) gleichzeitig mit demselben Sensor 25 gemessen werden. Die Bremsvorrichtung 1 kann aber auch nur mit einer Drehfunktion ausgestattet sein.

Die Sensoreinrichtung 5 ist besonders vorteilhaft in die Bremsvorrichtung 1 integriert. Dazu ist der Sensor 25 hier in die Bohrung 12 der Achseinheit 2 eingesetzt. Die Magnetringeinheit 15 umgibt den Sensor 25 radial und ist an dem Drehkörper 3 befestigt. Das hat den Vorteil, dass nicht Längentoleranzen, sondern nur genau herzustellende Durchmesser-Toleranzen zur Geltung kommen. Die radiale Lagerluft zwischen dem sich drehenden Drehkörper 3 und der stillstehenden Achseinheit 2 sind entsprechend gering und auch in der Serienfertigung gut beherrschbar.

Ein weiterer Vorteil ist, dass axiale Bewegungen bzw. Verschiebungen zwischen Drehkörper 3 und Achseinheit 2 das Sensorsignal nicht ungünstig beeinflussen, da in die radiale Richtung gemessen wird und der radiale Abstand für die Qualität des Messsignals im Wesentlichen maßgebend ist.

Ein Vorteil ist auch, dass die hier gezeigte Anordnung besonders unempfindlich gegen Verschmutzung und Flüssigkeiten ist, da der Sensor innen liegend angeordnet ist. Zudem kann der Sensor 25 in der Bohrung 12 beispielsweise mit einem Kunststoff umspritzt werden.

Um die Unterbringung des Sensors 25 weiter zu verbessern, ist dieser hier auf einer Leiterplatte 35 bzw. Print angeordnet. Dabei ist hier an der Leiterplatte 35 auch die Spuleneinheit 24 bzw. deren Anbindung 14 kontaktiert.

Des Weiteren ist an der Leiterplatte 35 auch die Anschlussleitung 11 angebunden, über welche die gesamte Bremsvorrichtung 1 mit dem zu bedienenden System verbunden wird. So kann an der Leiterplatte 35 beispielsweise ein 6- oder 8-poliger Stecker befestigt werden, über den dann sowohl der Sensor 25 als auch die Spuleneinheit 24 mit der entsprechenden Steuerung verbunden werden. In der Anschlussleitung 11 ist hier auch die Signalleitung 45 zum Übermitteln des Sensorsignals angeordnet.

So kann die Bremsvorrichtung 1 besonders einfach und schnell installiert werden. Um das ganze System besonders robust gegenüber Fehlern und Störungen zu gestalten, kann die Leiterplatte 35 in der Bohrung 12 mitsamt des Sensors 25 in der Achseinheit 2 vergossen werden.

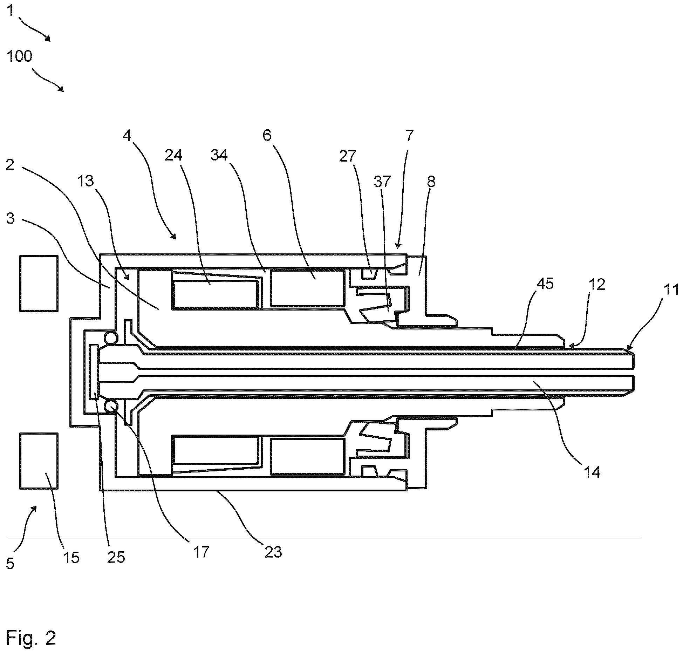

In der Figur 2 ist eine Ausgestaltung der Bremsvorrichtung 1 gezeigt, welche sich im Wesentlichen in der konstruktiven Unterbringung der Sensoreinrichtung 5 von der zuvor beschriebenen Ausführung unterscheidet. Dabei ist die Magnetringeinheit 15 hier an derjenigen Stirnseite des Drehkörpers 3 angeordnet, welche verschlossen ist bzw. durch welche sich nicht die Achseinheit 2 erstreckt.

Für den Magnetfeldsensor 25 ist hier eine besonders Bauraum sparende Unterbringung innerhalb des Drehkörpers 3 vorgesehen. Dazu ist der Magnetfeldsensor 25 im Aufnahmeraum 13 angeordnet. Dabei liegt der Sensor 25 in dem Teil des Aufnahmeraums 13, welcher durch die Dichtungseinheit 17 von dem Teil mit dem Medium 34 abgetrennt ist. Dieser Teil des Aufnahmeraums 13 liegt hier in einer zentralen Ausbuchtung des Drehkörpers 3. Dabei ist der Sensor 25 hier an einer Stirnseite der Achseinheit 2 befestigt.

Die axial versetzte Positionierung der Magnetringeinheit 15 ist hier stark schematisiert und kann beispielsweise auch enger an dem Drehkörper 3 anliegend erfolgen, sodass die Magnetringeinheit 15 den Sensor 25 ringförmig umgibt.

Bei der hier gezeigten Ausgestaltung ist der Sensor 25 an derjenigen Stirnseite des Drehkörpers 3 angeordnet, welche der Austrittsseite für die Signalleitung 45 bzw. die Anschlussleitung 11 gegenüberliegt. Daher wird das Sensorsignal hier durch die Bohrung 12 in der Achseinheit zur gegenüberliegenden Seite geleitet und muss daher das Magnetfeld der Spuleneinheit 24 passieren.

Um eine Störung des Signals zu vermeiden, erfolgt die Signalübertragung hier optisch. Dazu wird das Lichtsignal hier einfach durch die Bohrung 12 der Achseinheit 2 hindurchgestrahlt. Es kann aber auch vorgesehen sein, dass die Signalleitung 45 wenigstens im Bereich der Spuleneinheit 24 als ein Lichtwellenleiter ausgebildet ist. Zum Senden bzw. Empfangen der Signale sind entsprechende hier nicht näher dargestellte Fotodioden vorgesehen.

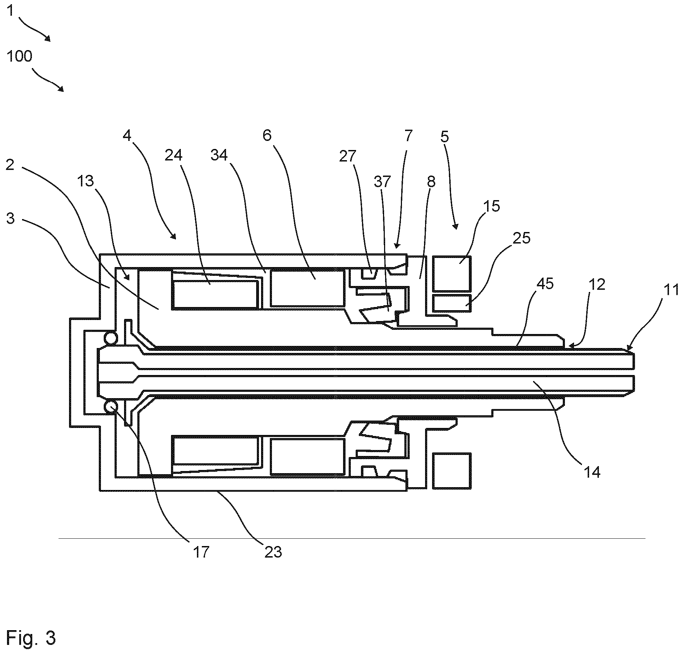

Die Figur 3 zeigt eine Ausgestaltung, welche sich im Wesentlichen in der konstruktiven Unterbringung der Sensoreinrichtung 5 von den zuvor beschriebenen Ausführungen unterscheidet. Der Magnetfeldsensor 25 ist hier außerhalb der Achseinheit 2 angeordnet ist und von der Magnetringeinheit 15 radial umgeben. Eine solche Ausgestaltung ist besonders vorteilhaft, wenn ein besonders kleiner Achsendurchmesser erforderlich ist. Zudem wird eine erhebliche Verkürzung der Toleranzkette erreicht. Dabei ist der Sensor 25 hier ortsfest an der Achseinheit 2 befestigt, während die Magnetringeinheit 15 zusammen mit dem Drehkörper 3 drehbar ist. Eine solche Anordnung ist besonders zudem gering fehleranfällig durch Toleranzen, da im Wesentlichen nur die Lagetoleranz der Achseinheit 2 ins Gewicht fällt. Zudem hat die hier gezeigte Anordnung den Vorteil, dass auch in axiale Richtung besonders reproduzierbar gemessen werden kann, was bei einer Ausführung mit Druckfunktion sehr vorteilhaft ist.

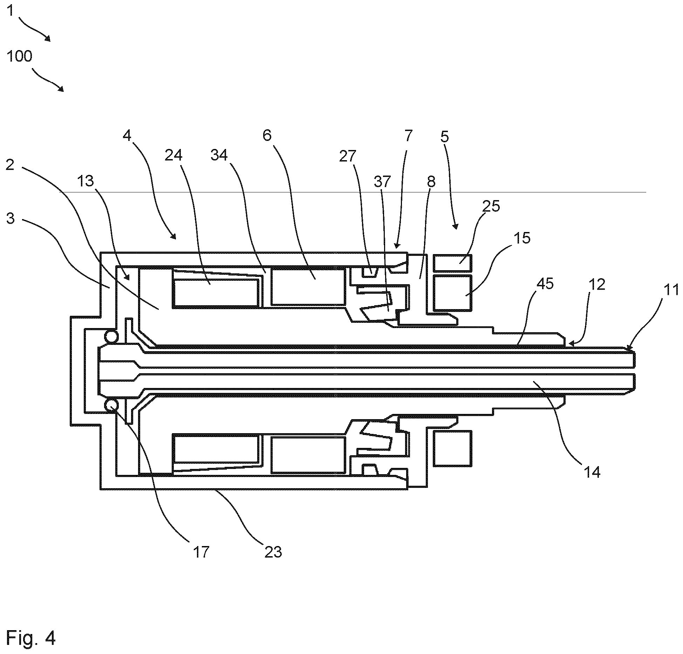

Die Figur 4 zeigt eine Ausgestaltung, welche sich im Wesentlichen in der konstruktiven Unterbringung der Sensoreinrichtung 5 von den zuvor beschriebenen Ausführungen unterscheidet. Der Magnetfeldsensor 25 ist hier radial außerhalb der Magnetringeinheit 15 angeordnet. Das bietet eine besonders einfache und unaufwendige Fertigung und zugleich eine erhebliche Verkürzung der Toleranzkette. Beispielsweise kann der Sensor 25 an der Achseinheit 2 befestigt sein. Möglich ist aber auch, dass der Sensor 25 in eine Verschlusskappe oder dergleichen integriert wird.

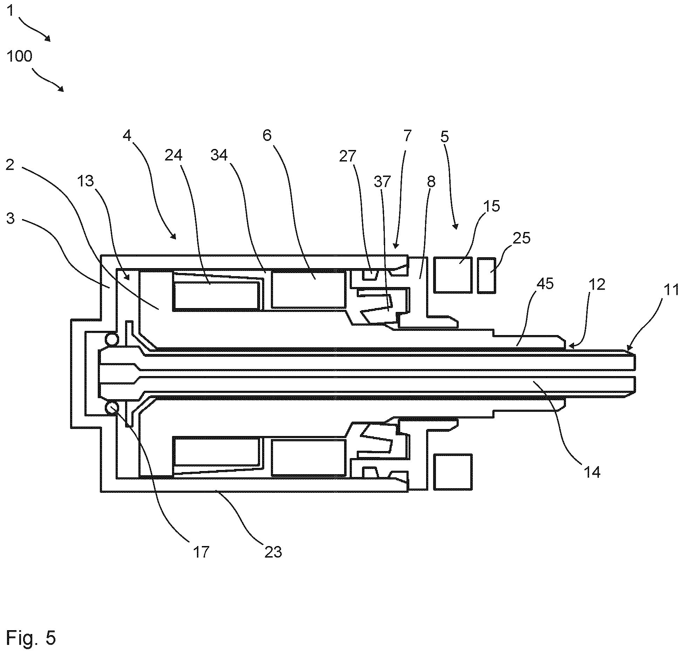

In der Figur 5 ist eine Ausführung gezeigt, welche sich im Wesentlichen in der konstruktiven Unterbringung der Sensoreinrichtung 5 von den zuvor beschriebenen Ausführungen unterscheidet. Der Magnetfeldsensor 25 ist hier axial neben der Magnetringeinheit 15 positioniert. Eine solche Ausführung ist beispielsweise vorteilhaft, wenn die Magnetringeinheit 15 in axialer Richtung besonders schmal ausfallen soll. Vorteilhaft ist, dass die Magnetringeinheit 15 in der hier gezeigten Ausführung in radialer Richtung breiter ausfallen kann. Auch die hier gezeigte Ausführung bietet eine erhebliche Verkürzung der Toleranzkette.

Bei den in den Figuren 1 und 3 bis 5 gezeigten Ausführungen ist die Wandung 8 magnetisch leitfähig ausgebildet. Dadurch kann verhindert werden, dass sich das Magnetfeld der Magnetringeinheit 15 und das Magnetfeld der Spuleneinheit 24 gegenseitig ungünstig beeinflussen. Beispielsweise ist die Wandung 8 aus einem Magnetfeld abschirmenden Metall und beispielsweise aus einem Metall mit einer relativen magnetischen Permeabilität von wenigstens 100.000 ausgebildet. Beispielsweise ist die Wandung 8 aus einer Nickel-Eisen-Legierung gefertigt. Zugleich dient die Wandung 8 hier als Anbindung für die Dichtungseinrichtung 7. Um das Magnetfeld der in der Figur 2 gezeigten Magnetringeinheit 15 von dem Magnetfeld der Spuleneinheit 24 abzuschirmen, ist dort die Stirnseite des Drehkörpers 3 aus einem magnetisch leitfähigen Material gefertigt.

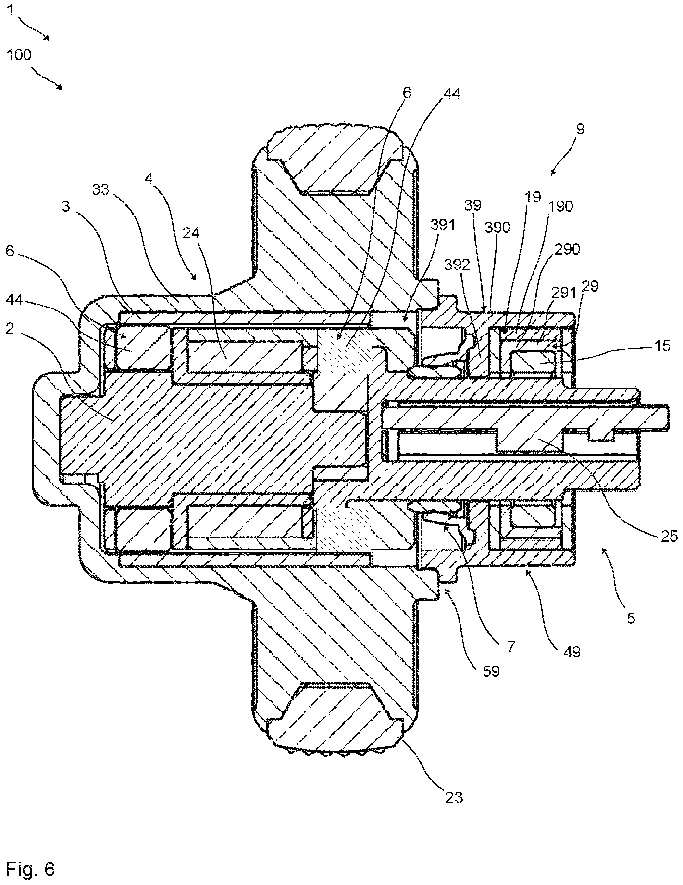

Die Figur 6 zeigt eine erfindungsgemäße Bremsvorrichtung mit einer Halteeinrichtung 49 und einer Abschirmeinrichtung 9 zur Abschirmung der Sensoreinrichtung 5 vor dem Magnetfeld der Spuleneinheit 24 der Bremseinrichtung 4. Die hier gezeigte Bremsvorrichtung 1 unterscheidet sich von den zuvor beschriebenen Bremsvorrichtungen 1 neben der Abschirmeinrichtung 9 insbesondere auch durch die Ausgestaltung des Drehkörpers 3 und des Zusatzteils 33. Die hier gezeigte Bremsvorrichtungen ist beispielsweise ein Mausrad einer Computermaus.

Der Drehkörper 3 ist hier als eine zylindrische Hülse ausgebildet und an seiner Außenseite vollständig von dem Zusatzteil 33 umgeben. Dabei schließt das Zusatzteil 33 den Drehkörper an derjenigen radialen Stirnseite ab, welche von der Magnetringeinheit 15 abgewandt ist. Zur unterstützenden Befestigung des Zusatzteils 33 kann die Halteeinrichtung 49 eine Befestigungseinrichtung 59 umfassen.

Das Zusatzteil 33 weist eine radial umlaufende Erhebung mit einem erheblich vergrößerten Durchmesser auf. Dadurch eignet sich die hier gezeigte Bremsvorrichtung 1 besonders gut als Mausrad einer Computermaus oder dergleichen. Die Erhebung ist hier mit einer Nut ausgestaltet, in welche hier ein besonders griffiger Werkstoff und z. B. Gummi eingebettet ist.

Die hier gezeigte Bremsvorrichtung 1 weist zwei voneinander beabstandete Keillagereinrichtungen 6 auf. Die Keillagereinrichtungen 6 sind jeweils mit mehreren radial um die Achseinheit 2 angeordneten Bremskörpern 44 ausgestattet. Zwischen den Keillagereinrichtungen 6 ist die Spuleneinheit 24 angeordnet. Die Bremskörper 44 sind hier beispielsweise Wälzkörper, welche sich an der Innenseite des Drehkörpers 3 bzw. der Außenseite der Achseinheit 2 abrollen.

Die Magnetringeinheit 15 ist drehfest mit dem Drehkörper 3 gekoppelt, sodass die Magnetringeinheit 15 bei einer Drehung des Drehkörpers 3 mitgedreht wird. Der Magnetfeldsensor 25 ist hier in die Bohrung 12 der Achseinheit 2 eingesetzt. Die Magnetringeinheit 15 umgibt den Sensor 25 radial und ist axial endständig angeordnet. Der Magnetfeldsensor 25 ist hier mit einem axialen Versatz zum axialen Zentrum der Magnetringeinheit 15 angeordnet. Dadurch ergibt sich eine besonders hochauflösende und reproduzierbare Sensierung der axialen Position des Drehkörpers 3 in Bezug zur Achseinheit 2.

Die Abschirmeinrichtung 9 umfasst einen hier als Abschirmring 190 ausgebildeten Abschirmkörper 19. Die Abschirmeinrichtung 9 umfasst zudem eine Trenneinheit 29, welche hier durch einen mit einem Füllmedium 291 gefüllten Spalt 290 bereitgestellt wird. Zudem umfasst die Abschirmeinrichtung 9 eine magnetische Entkopplungseinrichtung 39, welche hier durch die Halteeinrichtung 49 bereitgestellt wird und eine Entkopplungshülse 390 und einen Entkopplungsspalt 391 umfasst.

Die Entkopplungshülse 190 umfasst hier eine Axialwand 392, an welcher die Dichtungseinrichtung 7 angeordnet ist. Zudem kann an der Axialwand 392 eine hier nicht näher dargestellte Lagereinrichtung 22 angeordnet sein.

Der Abschirmkörper 19 ist hier mit einem L-förmigen Querschnitt ausgestattet und aus einem magnetisch besonders leitfähigen Werkstoff gefertigt. Der Abschirmkörper 19 umgibt die Magnetringeinheit 15 an ihrer radialen Außenseite und an ihrer der Spuleneinheit 24 zugewandten axialen Seite. Zur magnetischen Entkopplung ist zwischen dem Abschirmkörper 19 und der Magnetringeinheit 15 der Spalt 290 angeordnet und mit einem Füllmedium 291 gefüllt. Dabei weist das Füllmedium 291 eine besonders geringe magnetische Leitfähigkeit auf. Zudem ist die Magnetringeinheit 15 über das Füllmedium 291 an dem Abschirmkörper 19 befestigt.

Zwischen dem Drehkörper 3 und dem Abschirmkörper 19 wird eine magnetische Entkopplung durch die Entkopplungseinrichtung 39 erreicht. Dazu weisen die Entkopplungshülse 390 und ein im Entkopplungsspalt 391 angeordnetes Füllmedium ebenfalls eine besonders geringe magnetische Leitfähigkeit auf. Die Entkopplungshülse 391 ist hier drehfest mit dem Abschirmkörper 19 und dem Zusatzteil 33 sowie dem Drehkörper 3 verbunden.

Um den Drehkörper 3 noch besser von der Sensoreinrichtung 5 entkoppeln zu können, ist der Drehkörper 3 hier axial beabstandet zur Entkopplungshülse 390 angeordnet. Das Ende des Drehkörpers 3, welches der Magnetringeinheit 15 zugewandt ist, ragt dabei nicht über den Bremskörper 44 hinaus. Zudem ist der Drehkörper 3 gegenüber dem Zusatzteil 33 axial zurückversetzt bzw. verkürzt. Dadurch ergibt sich auf sehr kleinem Bauraum eine besonders vorteilhafte magnetische und räumliche Trennung von Drehkörper 3 und Entkopplungshülse 390.

Da das Magnetfeld der Spuleneinheit 24 für die Bremswirkung über den Drehkörper 3 fließt, bietet eine solche Ausgestaltung eine besonders gute Abschirmung. Damit dieser magnetische Fluss den Sensor 25 möglichst wenig beeinflusst, wird der Drehkörper 3 in axialer Richtung früher beendet und das magnetisch nicht leitende Zusatzteil 33 übernimmt die konstruktiven Funktionen (Lagerstelle, Dichtstellen...). Der Abstand zum Sensor 25 ist dadurch auch größer und die Baugruppe wird insgesamt leichter.

Der Drehkörper 3 ist aus einem magnetisch besonders leitfähigen Material. Das Zusatzteil 33 und die Entkopplungshülse 390 sind hingegen aus einem magnetisch nicht leitfähigen Material. Der Abschirmkörper 19 und der Drehkörper 3 sind hier beispielsweise aus einem µ-Metall. Die hier als magnetisch nicht leitfähig beschriebenen Komponenten bestehen beispielsweise aus Kunststoff und weisen eine relative magnetische Permeabilität von kleiner 10 auf.

Die problematischen Felder, die die Drehwinkelmessung in der Regel stören können, sind vor allem die Felder in radialer Richtung. Diese Felder werden hier mit einem als Mantel wirkenden Abschirmkörper 19 aus geeignetem Material abgeschirmt, z. B. magnetisch leitendem Stahl. Zusätzlich kann so das Magnetfeld der Magnetringeinheit 15 noch verstärkt werden. Dadurch kann die Magnetringeinheit 15 kleiner (dünner) dimensioniert werden und so Material, Bauvolumen und Herstellungskosten eingespart werden.

Die Konstruktion wird erfindungsgemäß auch dadurch verbessert, dass die Wandstärke des Abschirmkörpers 19 variiert wird und ein Spalt 290 zwischen Magnetringeinheit 15 und Abschirmkörper 19 vorgesehen ist. Durch den Spalt 290 zwischen Ring 15 und Abschirmkörper 19 kann die Abschirmung und die Verstärkung optimal angepasst werden. Das Material des Abschirmkörpers 19 ist hier so gewählt, dass es nicht in magnetische Sättigung geht, damit äußere Magnetfelder ausreichend abgeschirmt werden (Material in Sättigung lässt Magnetfelder gleich wie Luft durch, also mit der magnetischen Feldkonstante µ0). Bei vorteilhafter Auslegung des Spaltes 290 zwischen Ring 15 und Abschirmkörper 19 schließt sich das Magnetfeld nicht zu stark über den Abschirmkörper 19 und das Feld in im Zentrum beim Sensor 25 ist ausreichend homogen und wird erhöht verglichen mit einem Ring 15 gleicher oder größer ohne Abschirmkörper 19.

Die hier gezeigte Dimensionierung der Abschirmeinrichtung 9 ist besonders gut für ein Mausrad einer Computermaus geeignet und weist beispielsweise die nachfolgenden Abmessungen auf. Der Abschirmring 190 ist 0,5 mm dick, der Abstand zwischen Abschirmring 190 und Ring 15 auch 0,5 mm, die Breite des Rings 15 ist 2 mm und der Durchmesser des Rings 15 ist 8 mm. In diesem Fall ist das mögliche Störfeld von der Spuleneinheit 24 bei 140 µT, dadurch ergibt sich ein möglicher Fehler in der Winkelmessung von 0,1° (vgl. Erdmagnetfeld: ca. 48µT in Europa).

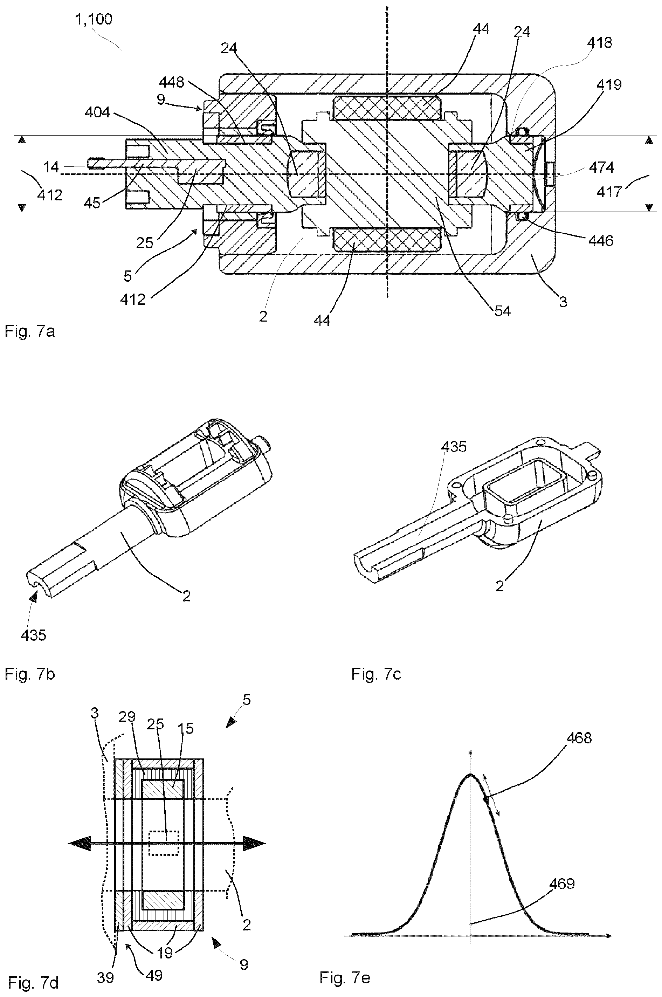

Figur 7a zeigt eine Variante, bei der eine Push-Pull-Funktion integriert ist. Ein Taster 474 kann betätigt werden und wird automatisch zurückgestellt. Die Durchmesser der beiden Lagerstellen 412, 418 sind gleich groß gewählt. Dadurch ändert sich bei einer relativen axialen Verschiebung der ersten Bremskomponente 2 (entspricht der Achseinheit) zu der zweiten Bremskomponente 3 (entspricht dem Drehkörper) das Volumen innerhalb der Kammer nicht. Eine Verschiebung der ersten Bremskomponente 2 in der Orientierung von Figur 7a nach links hin führt dazu, dass der Abstand des Magnetfeldsensors 25 von der Magnetringeinheit 15 vergrößert bzw. verändert wird.

Durch eine Axialverschiebung verändert sich das empfangene Signal 468 gemäß der Darstellung von Figur 7e. Figur 7e zeigt den Verlauf der Amplitude 469 des durch den Magnetfeldsensor 25 detektierten Signals 468 in Abhängigkeit zur axialen Verschiebung der Bremskomponenten 2, 3 (horizontale Achse) dargestellt. Durch eine axiale Verschiebung des Magnetfeldsensors 25 gegenüber der Magnetringeinheit 15 verändert sich die Amplitude 469 des detektierten Signals 468. Eine axiale Verschiebung bzw. ein Herunterdrücken des Zusatzteils 33 oder eine seitliche Verschiebung des Zusatzteils 33 kann so detektiert werden. Mit dem gleichen Sensor kann auch der Drehwinkel erfasst werden, wobei zur Erfassung des Drehwinkels die Richtung des Magnetfeldes ermittelt wird. Die Intensität bestimmt die axiale Position. Aus einer Veränderung des Signals 468 kann deshalb auf eine axiale Betätigung der Bremsvorrichtung 1 bzw. des Tasters 474 geschlossen werden. Das ist vorteilhaft, da ein einziger (mehrdimensionaler) Hallsensor zur Bestimmung der Winkelposition und der Bestimmung einer Axialposition verwendet werden kann.

In der Figur 7a ist die erste Bremskomponente 2 im Inneren der zweiten Bremskomponente 3 angeordnet und wird durch einen Halter 404 formschlüssig und/oder kraftschlüssig gehalten. Der Halter 404 kann beispielsweise an einer externen Konsole oder an einem Gerät befestigt werden. Der Halter 404 wird regelmäßig drehfest befestigt. Die zweite Bremskomponente 3 ist relativ zu der ersten Bremskomponente 2 kontinuierlich drehbar daran aufgenommen.

Der Halter 404 kann, wie in Figuren 7b und 7c dargestellt, bevorzugt zweiteilig ausgeführt sein. Dadurch wird vor allem die Montage der elektrischen Leitungen und insbesondere der Sensorleitung 45 innerhalb der ersten Bremskomponente 2 vereinfacht. Die Kabel können durch die hier offene Kabeldurchführung gelegt werden.

In Figur 7d ist die Sensoreinrichtung 5 noch einmal im Detail dargestellt. Die erste Bremskomponente 2 und die hier als Drehteil ausgeführte zweite Bremskomponente 3 sind nur angedeutet (gestrichelte Linien). Die Sensoreinrichtung 5 stützt sich über die Entkopplungseinrichtung 39 an der drehbaren zweiten Bremskomponente 3 magnetisch entkoppelt ab. Die Abschirmeinrichtung 9 besteht hier aus einem dreiteiligen Abschirmkörper 19. Darüber hinaus ist außerdem noch eine Trenneinheit 29 zur magnetischen Trennung vorhanden. Die Magnetringeinheit 15 wird zum Messen der Orientierung bzw. des Drehwinkels der magnetorheologischen Bremseinrichtung 1 genutzt. Der Magnetfeldsensor 25 ist innerhalb der ersten Bremskomponente 2 angeordnet. Kleine relative axiale Verschiebungen können außerdem genutzt werden, um ein Herunterdrücken beispielsweise eines Bedienknopfs zu detektieren.

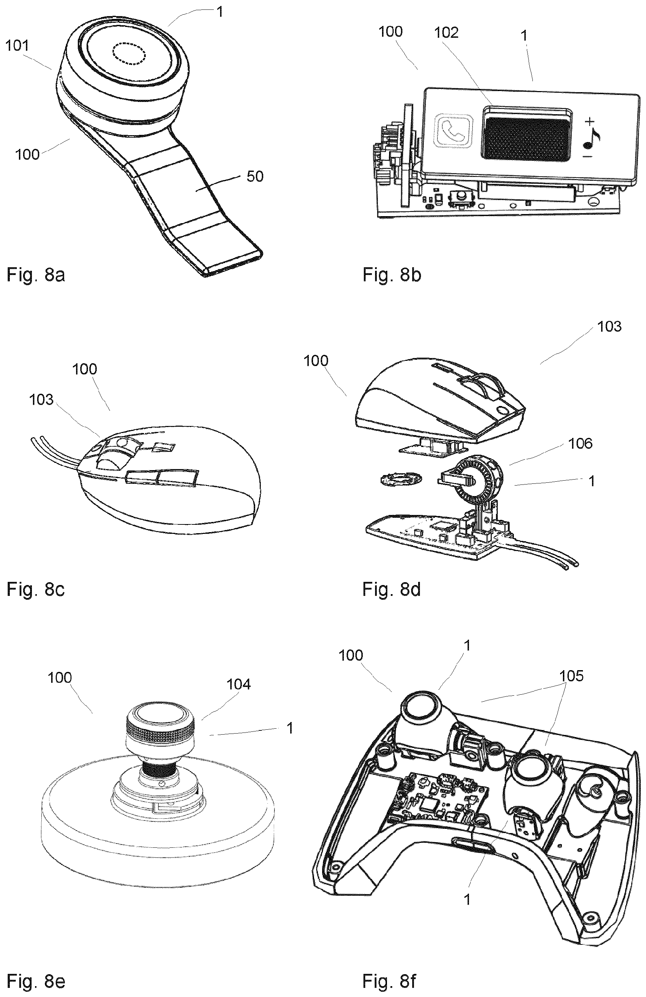

Figuren 8a bis 8e zeigen Geräte, welche mit der Erfindung ausgestattet sind. Die Bremsvorrichtungen 1 sind hier jeweils als haptische Bedieneinrichtung 100 ausgeführt.

Figur 8a zeigt einen haptischen Bedienknopf 101. Der Bedienknopf ist über eine Konsole 50 befestigt. Der Bedienknopf 101 wird über das Hülsenteil bedient. Die Benutzerschnittstelle kann zusätzlich genutzt werden, um Informationen zu übermitteln.

In Figur 8b ist die Bremsvorrichtung 1 als Daumenwalze 102 mit haptischer Bedieneinrichtung 100 dargestellt. Die Daumenwalze 102 ist bevorzugt beispielsweise in Lenkrädern einsetzbar. Die Daumenwalze ist jedoch nicht auf diesen Anwendungsfall beschränkt. Die Daumenwalze 102 kann allgemein je nach Einbausituation auch mit jedem anderen Finger nutzbar sein.

In Figur 8c und Figur 8d ist die erfindungsgemäße Bremsvorrichtung 1 als Mausrad 106 einer Computermaus 103 ausgeführt. Die magnetorheologische Bremseinrichtung 1 kann genutzt werden, um ein haptisches Feedback zu steuern.

Figur 8e zeigt einen Joystick 104 mit einer Bremsvorrichtung 1 als haptische Bedieneinrichtung 100. Figur 8f zeigt ein Gamepad 105 mit der Bremsvorrichtung 1, um dem Spieler in Abhängigkeit der Spielsituation ein haptisches Feedback zu geben.

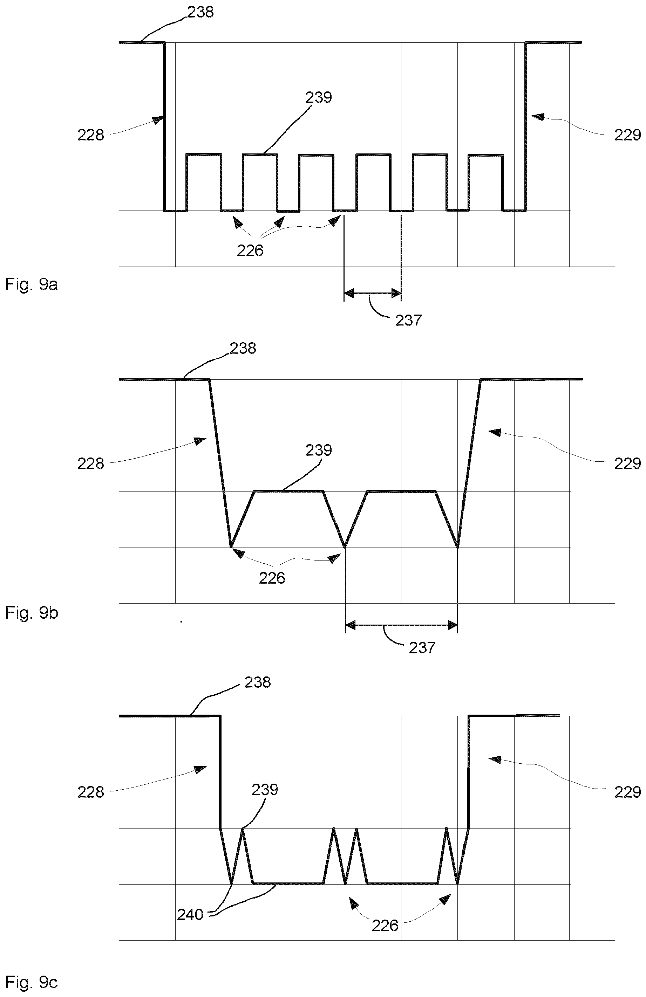

In den Figuren 9a, 9b und 9c sind mögliche Ausführungsvarianten zur Steuerung eines dynamisch erzeugten Magnetfeldes bzw. eines dynamisch erzeugten Bremsmoments in Abhängigkeit von dem Drehwinkel dargestellt.

Figur 9a zeigt dabei eine Variante, bei der die Bremsvorrichtung 1als Drehknopf und haptische Bedienhilfe eingesetzt wird. Dargestellt ist der Drehwiderstand über dem Drehwinkel. Es kann ein linker Endanschlag 228 und ein rechter Endanschlag 229 erzeugt werden. Beim Weiterdrehen des Drehknopfes wird dort ein hohes Magnetfeld bzw. Anschlagmoment 238 erzeugt, wodurch der Drehknopf einen hohen Widerstand gegenüber einer Drehbewegung entgegensetzt. Der Benutzer erhält die haptische Rückmeldung eines Endanschlags.

Dabei kann eine Rasterung der Drehbewegung erfolgen bzw. erzeugt werden. Beispielsweise kann dies verwendet werden, um durch ein grafisches Menü zu navigieren und Menüpunkte auszuwählen. Hier ist direkt neben dem linken Endanschlag 228 ein erster Rasterpunkt 226 vorgesehen, der bei einer Bedienung z. B. einem ersten Menüpunkt entspricht. Soll der nächste Menüpunkt angewählt werden, so muss der Drehknopf im Uhrzeigersinn gedreht werden. Dazu muss das dynamisch erzeugte höhere Magnetfeld bzw. Rastmoment 239 bzw. dessen Reibmoment überwunden werden, bevor der nächste Rasterpunkt 226 erreicht wird.

Ein Winkelabstand 237 zwischen einzelnen Rasterpunkten ist dynamisch veränderbar und wird an die Anzahl der zur Verfügung stehenden Rasterpunkte bzw. Menüpunkte angepasst.

Figur 9b zeigt eine Variante, bei der zu den Endanschlägen 228, 229 hin das Magnetfeld nicht schlagartig ansteigt, sondern einen steilen Verlauf nimmt. Weiterhin sind an den Rasterpunkten 226 zu beiden Drehseiten hin jeweils rampenartige Steigungen des Magnetfeldes vorgesehen, wodurch der Drehwiderstand in die entsprechenden Drehrichtungen hin zunimmt. Hier werden mit der gleichen Bedieneinrichtung 100 nur drei Rasterpunkte 226 zur Verfügung gestellt, deren Winkelabstand 237 größer ist als in dem Beispiel gemäß Figur 9a.

Figur 9c zeigt eine Variante, bei der zwischen einzelnen Rasterpunkten 226 ein geringerer Drehwiderstand vorliegt und nur direkt benachbart zu den Rasterpunkten 226 jeweils ein erhöhtes Magnetfeld 239 erzeugt wird, um ein Einrasten an den einzelnen Rasterpunkten 226 zu ermöglichen und gleichzeitig nur einen geringen Drehwiderstand zwischen einzelnen Rasterpunkten zur Verfügung zu stellen.

Grundsätzlich ist auch eine Mischung der Betriebsweisen und der Magnetfeldverläufe der Figuren 9a, 9b und 9c möglich. Z. B. kann bei unterschiedlichen Untermenüs eine entsprechend unterschiedliche Einstellung des Magnetfeldverlaufes erfolgen.

Möglich ist es in allen Fällen auch, dass bei z. B. einem Ripple (Raster) nicht wie bislang zwischen wenig und mehr Stromstärke mit gleicher Polung geschaltet wird (also z. B. +0,2 auf +0,8A = Rippel), sondern abwechslungsweise mit verändertet Polung, d. h. von +0,2 auf +0,8A und dann den nächsten Rippel mit -0,2A auf - 0,8A und dann die nächste Momentenspitze von +0,2 auf +0,8A usw.

Der vorzugsweise niederlegierte Stahl kann ein Restmagnetfeld behalten. Der Stahl wird vorzugsweise regelmäßig oder bei Bedarf entmagnetisiert (u.a. durch ein spezielles Wechselfeld).

Bevorzugt wird für die vom Magnetfeld durchflossenen Komponenten der Werkstoff FeSi3P (Siliziumstahl bzw. Silicon Steel) oder ein artverwandter Werkstoffe verwendet.

In allen Fällen kann eine Sprach- oder Geräuschsteuerung durchgeführt werden. Mit der Sprachsteuerung kann die Bremseinrichtung adaptiv gesteuert werden.

Wenn die Dreheinheit nicht gedreht wird, d. h. der Winkel ist konstant, wird vorzugsweise über die Zeit der Strom kontinuierlich verringert. Der Strom kann auch geschwindigkeitsabhängig (Drehwinkelgeschwindigkeit der Dreheinheit) variiert werden.

### Bezugszeichenliste:

| | | | |
|---|---|---|---|
| 1 | Bremsvorrichtung | 102 | Daumenwalze |
| 2 | Achseinheit | 103 | Computermaus |
| 3 | Drehkörper | 104 | Joystick |
| 4 | Bremseinrichtung | 105 | Gamepad |
| 5 | Sensoreinrichtung | 106 | Mausrad |
| 6 | Keillagereinrichtung () | 190 | Abschirmring |
| 7 | Dichtungseinrichtung | 226 | Rasterpunkt |
| 8 | Wandung | 228 | Endanschlag |
| 9 | Abschirmeinrichtung | 229 | Endanschlag |
| 11 | Anschlussleitung | 237 | Winkelabstand |
| 12 | Bohrung | 238 | Anschlagmoment |
| 13 | Aufnahmeraum | 239 | Rastermoment |
| 14 | Anbindung | 240 | Grundmoment |
| 15 | Magnetringeinheit | 290 | Spalt |
| 17 | Dichtungseinheit | 291 | Füllmedium |
| 19 | Abschirmkörper | 390 | Entkopplungshülse |
| 22 | Lagereinrichtung | 391 | Entkopplungsspalt |
| 23 | Fingerwalze | 392 | Axialwand |
| 24 | Spuleneinheit | 404 | Halter |
| 25 | Magnetfeldsensor | 412 | Lagerstelle |
| 27 | Dichtteil | 416 | Durchmesser |
| 29 | Trenneinheit | 418 | Lagerstelle |
| 33 | Zusatzteil | | |
| 34 | Medium | | |
| 35 | Leiterplatte | | |
| 37 | Dichtteil | | |
| 39 | Entkopplungseinrichtung | | |
| 44 | Bremskörper | | |
| 45 | Signalleitung | | |
| 49 | Halteeinrichtung | | |
| 50 | Konsole | | |
| 59 | Befestigungseinrichtung | | |
| 100 | Bedieneinrichtung | | |
| 101 | Bedienkopf | | |

## Patentansprüche

1. Magnetorheologische Bremsvorrichtung (1) zum Bremsen von Drehbewegungen, insbesondere magnetorheologische Bedieneinrichtung (100) zur Einstellung von Bedienzuständen wenigstens mittels Drehbewegungen, mit wenigstens einer Achseinheit (2) und mit wenigstens einem um die Achseinheit (2) drehbaren Drehkörper (3), wobei die Drehbarkeit des Drehkörpers (3) mittels wenigstens einer magnetorheologischen Bremseinrichtung (4) gezielt bremsbar ist und umfassend wenigstens eine Sensoreinrichtung (5) zur Erfassung einer Drehposition des Drehkörpers (3), wobei die Sensoreinrichtung (5) wenigstens eine Magnetringeinheit (15) und wenigstens einen Magnetfeldsensor (25) zur Erfassung eines Magnetfeldes der Magnetringeinheit (15) umfasst,
und umfassend wenigstens eine Abschirmeinrichtung (9) zur wenigstens teilweisen Abschirmung der Sensoreinrichtung (5) vor einem Magnetfeld einer Spuleneinheit (24) der Bremseinrichtung (4), wobei die Abschirmeinrichtung (9) wenigstens einen die Magnetringeinheit (15) wenigstens abschnittsweise umgebenden Abschirmkörper (19) und wenigstens eine zwischen dem Abschirmkörper (19) und der Magnetringeinheit (15) angeordnete Trenneinheit (29) mit einer um ein Vielfaches geringeren magnetischen Leitfähigkeit als der Abschirmkörper (19) umfasst und wobei wenigstens eine Halteeinrichtung (49) vorgesehen ist, welche die Abschirmeinrichtung (9) wenigstens teilweise drehfest an den Drehkörper (3) anbindet,
**dadurch gekennzeichnet,**
**dass** die Abschirmeinrichtung (9) wenigstens eine zwischen dem Abschirmkörper (19) und dem Drehkörper (3) angeordnete magnetische Entkopplungseinrichtung (39) umfasst und dass die Entkopplungseinrichtung (39) eine um ein Vielfaches geringere magnetische Leitfähigkeit als der Abschirmkörper (19) aufweist und dass die Entkopplungseinrichtung (39) wenigstens teilweise durch die Halteeinrichtung (49) bereitgestellt wird und/oder
**dass** die Halteeinrichtung (49) wenigstens eine sich zwischen dem Drehkörper (3) und dem Abschirmkörper (19) erstreckende Wegstrecke aufweist, welche wenigstens einem Viertel und vorzugsweise wenigstens der Hälfte eines maximalen Durchmessers einer elektrischen Spule der Spuleneinheit (24) entspricht.

2. Magnetorheologische Bremsvorrichtung (1) nach einem der vorhergehenden Ansprüche, wobei der Drehkörper (3) und/oder der Abschirmkörper (19) wenigstens teilweise einstückig mit der Halteeinrichtung (49) verbunden sind.

3. Magnetorheologische Bremsvorrichtung (1) nach einem der vorhergehenden Ansprüche, wobei der Drehkörper (3) und/oder der Abschirmkörper (19) und/oder die Trenneinheit (29) wenigstens teilweise an der Halteeinrichtung (49) montiert sind.

4. Magnetorheologische Bremsvorrichtung (1) nach einem der vorhergehenden Ansprüche, wobei der Abschirmkörper (19) nicht zwischen dem Magnetfeldsensor (25) und der Magnetringeinheit (15) angeordnet ist, sodass der Abschirmkörper den Magnetfeldsensor (25) nicht von dem zu erfassenden Magnetfeld der Magnetringeinheit (15) abschirmt.

5. Magnetorheologische Bremsvorrichtung (1) nach einem der vorhergehenden Ansprüche, wobei der Abschirmkörper (19) die Magnetringeinheit (15) wenigstens an einer radialen Außenseite wenigstens abschnittsweise umgibt und/oder wobei der Abschirmkörper (19) die Magnetringeinheit (15) wenigstens an wenigstens einer axialen Seite wenigstens abschnittsweise umgibt, welche der Spuleneinheit (24) der Bremseinrichtung (4) zugewandt ist.

6. Magnetorheologische Bremsvorrichtung (1) nach einem der vorhergehenden Ansprüche, wobei die Trenneinheit (29) wenigstens einen zwischen dem Abschirmkörper (19) und der Magnetringeinheit (15) verlaufenden Spalt (290) und wenigstens ein im Spalt angeordnetes Füllmedium (291) umfasst und wobei das Füllmedium (291) die Magnetringeinheit (15) drehfest mit dem Abschirmkörper (19) verbindet.

7. Magnetorheologische Bremsvorrichtung (1) nach einem der vorhergehenden Ansprüche, wobei die Magnetringeinheit (15) mittels der Trenneinheit (29) und/oder des Abschirmkörpers (19) drehfest mit der Entkopplungseinrichtung (39) verbunden ist und wobei die Entkopplungseinrichtung (39) wenigstens mittelbar drehfest mit dem Drehkörper (3) verbunden ist.

8. Magnetorheologische Bremsvorrichtung (1) nach einem der vorhergehenden Ansprüche, wobei die Entkopplungseinrichtung (39) wenigstens eine Entkopplungshülse (390) umfasst, welche wenigstens die Achseinheit (2) radial umgibt und wenigstens abschnittsweise axial benachbart zu dem Drehkörper (3) angeordnet ist.

9. Magnetorheologische Bremsvorrichtung (1) nach dem vorhergehenden Anspruch, wobei die Entkopplungshülse (390) durch wenigstens einen Entkopplungsspalt (391) von dem Drehkörper (3) axial beabstandet ist.

10. Magnetorheologische Bremsvorrichtung (1) nach einem der beiden vorhergehenden Ansprüche, wobei die Entkopplungshülse (390) wenigstens abschnittsweise als ein separates Bauteil ausgebildet ist und/oder wenigstens abschnittsweise durch wenigstens ein den Drehkörper (3) radial umgebendes Zusatzteil (33) bereitgestellt wird und dabei insbesondere einstückig mit dem Zusatzteil (33) verbunden ist.

11. Magnetorheologische Bremsvorrichtung (1) nach einem der drei vorhergehenden Ansprüche, wobei an der Halteeinrichtung (49), insbesondere an der Entkopplungshülse (390), wenigstens eine Dichtungseinrichtung (7) befestigt ist und wobei die Dichtungseinrichtung (7) abdichtend an dem Drehkörper (3) und/oder an wenigstens einem den Drehkörper (3) radial umgebenden Zusatzteil (33) und/oder an der Achseinheit (2) anliegt, um einem Austreten eines in einem Aufnahmeraum (13) angeordneten magnetorheologischen Mediums (34) der Bremseinrichtung entgegen zu wirken.

12. Magnetorheologische Bremsvorrichtung (1) nach dem einem der vier vorhergehenden Ansprüche, wobei die Halteeinrichtung (49), insbesondere die Entkopplungshülse (390), wenigstens eine Axialwand (392) aufweist, welche sich zwischen der Bremseinrichtung (4) und der Magnetringeinheit (15) erstreckt und wobei an der Axialwand (392) wenigstens ein Teil der Dichtungseinrichtung (7) und/oder wenigstens eine Lagereinrichtung (22) für die Drehbewegung des Drehkörpers (3) gegenüber der Achseinheit (2) befestigt ist.

13. Magnetorheologische Bremsvorrichtung (1) nach einem der fünf vorhergehenden Ansprüche, wobei die Entkopplungshülse (390) aus Kunststoff gefertigt ist.

14. Magnetorheologische Bremsvorrichtung (1) nach einem der vorhergehenden Ansprüche, wobei der Drehkörper (3) von wenigstens einem Zusatzteil (33) radial umgeben ist und wobei der Drehkörper (3) wenigstens an demjenigen axialen Ende der Achseinheit (2) gegenüber dem Zusatzteil (33) axial zurückversetzt ist, an welchem die Magnetringeinheit (15) angeordnet ist.

15. Magnetorheologische Bremsvorrichtung (1) nach einem der vorhergehenden Ansprüche, wobei die Sensoreinrichtung (5) dazu geeignet und ausgebildet ist, zusätzlich zu der Drehposition des Drehkörpers (3) auch wenigstens eine axiale Position des Drehkörpers (3) in Bezug zur Achseinheit (2) zu erfassen und wobei die Magnetringeinheit (15) den Magnetfeldsensor (25) wenigstens abschnittsweise ringartig umgibt und wobei der Magnetfeldsensor (25) mit einem axialen Versatz zum axialen Zentrum der Magnetringeinheit (15) angeordnet ist.

## Claims

1. A magnetorheological braking device (1) for decelerating rotational movements, particularly a magnetorheological operating apparatus (100) for setting operating states at least by means of rotational movements, with said braking device having at least one axle unit (2) and at least one rotary body (3) that is rotatable about the axle unit (2), wherein the rotatability of the rotary body (3) can be decelerated in a targeted manner by means of at least one magnetorheological braking apparatus (4), and comprising at least one sensor apparatus (5) for sensing a rotational position of the rotary body (3), wherein the sensor apparatus (5) comprises at least one magnetic ring unit (15) and at least one magnetic field sensor (25) for sensing a magnetic field of the magnetic ring unit (15),
and comprising at least one shielding apparatus (9) for at least partially shielding the sensor apparatus (5) from a magnetic field of a coil unit (24) of the braking apparatus (4), wherein the shielding apparatus (9) comprises at least one shielding body (19) that at least sectionally surrounds the magnetic ring unit (15) and at least one separating unit (29) that is arranged between the shielding body (19) and the magnetic ring unit (15) and has a magnetic conductivity that is multiple times lower than that of the shielding body (19), and wherein at least one holding apparatus (49) is provided and connects the shielding apparatus (9) to the rotary body (3) in an at least partially rotationally fixed manner, **characterized in**
**that** the shielding apparatus (9) comprises at least one magnetic decoupling apparatus (39) that is arranged between the shielding body (19) and the rotary body (3), in that the decoupling apparatus (39) has a magnetic conductivity that is multiple times lower than that of the shielding body (19), and in that the decoupling apparatus (39) is at least partially made available by the holding apparatus (49), and/or
in that the holding apparatus (49) has at least one distance that extends between the rotary body (3) and the shielding body (19), wherein said distance corresponds at least to one quarter and preferably at least to half of a maximum diameter of an electric coil of the coil unit (24).

2. The magnetorheological braking device (1) according to one of the preceding claims, wherein the rotary body (3) and/or the shielding body (19) are at least partially connected to the holding apparatus (49) in one piece.

3. The magnetorheological braking device (1) according to one of the preceding claims, wherein the rotary body (3) and/or the shielding body (19) and/or the separating unit (29) are at least partially mounted on the holding apparatus (49).

4. The magnetorheological braking device (1) according to one of the preceding claims, wherein the shielding body (19) is not arranged between the magnetic field sensor (25) and the magnetic ring unit (15) such that the shielding body does not shield the magnetic field sensor (25) from the magnetic field of the magnetic ring unit (15) to be sensed.

5. The magnetorheological braking device (1) according to one of the preceding claims, wherein the shielding body (19) at least sectionally surrounds the magnetic ring unit (15) on at least one radial outer side and/or wherein the shielding body (19) at least sectionally surrounds the magnetic ring unit (15) on the at least one axial side that faces the coil unit (24) of the braking apparatus (4).

6. The magnetorheological braking device (1) according to one of the preceding claims, wherein the separating unit (29) comprises at least one gap (290) that extends between the shielding body (19) and the magnetic ring unit (15) and at least one filling medium (291) arranged in the gap, and wherein the filling medium (291) connects the magnetic ring unit (15) to the shielding body (19) in a rotationally fixed manner.

7. The magnetorheological braking device (1) according to one of the preceding claims, wherein the magnetic ring unit (15) is connected to the decoupling apparatus (39) in a rotationally fixed manner by means of the separating unit (29) and/or the shielding body (19), and wherein the decoupling apparatus (39) is at least indirectly connected to the rotary body (3) in a rotationally fixed manner.

8. The magnetorheological braking device (1) according to one of the preceding claims, wherein the decoupling apparatus (39) comprises at least one decoupling sleeve (390) that radially surrounds at least the axle unit (2) and is at least sectionally arranged axially adjacent to the rotary body (3).

9. The magnetorheological braking device (1) according to the preceding claim, wherein the decoupling sleeve (390) is axially spaced apart from the rotary body (3) by at least one decoupling gap (391).

10. The magnetorheological braking device (1) according to one of the two preceding claims, wherein the decoupling sleeve (390) is at least sectionally designed in the form of a separate component and/or at least sectionally made available by at least one additional part (33), which radially surrounds the rotary body (3), and in this case connected to the additional part (33), particularly in one piece.

11. The magnetorheological braking device (1) according to one of the three preceding claims, wherein at least one sealing arrangement (7) is fastened on the holding apparatus (49), particularly on the decoupling sleeve (390), and wherein the sealing arrangement (7) abuts on the rotary body (3) and/or on at least one additional part (33) that radially surrounds the rotary body (3) and/or on the axle unit (2) in a sealing manner in order to counteract an escape of a magnetorheological medium (34) of the braking apparatus arranged in a receptacle space (13).

12. The magnetorheological braking device (1) according to one of the four preceding claims, wherein the holding apparatus (49), particularly the decoupling sleeve (390), has at least one axial wall (392) that extends between the braking apparatus (4) and the magnetic ring unit (15), and wherein at least part of the sealing arrangement (7) and/or at least one bearing arrangement (22) for the rotational movement of the rotary body (3) relative to the axial unit (2) is fastened on the axial wall (392).

13. The magnetorheological braking device (1) according to one of the five preceding claims, wherein the decoupling sleeve (390) is made of plastic.

14. The magnetorheological braking device (1) according to one of the preceding claims, wherein the rotary body (3) is radially surrounded by at least one additional part (33), and wherein the rotary body (3) is axially set back relative to the additional part (33) on the axial end of the axle unit (2), on which the magnetic ring unit (15) is arranged.

15. The magnetorheological braking device (1) according to one of the preceding claims, wherein the sensor apparatus (5) is suitable and designed for not only sensing the rotational position of the rotary body (3), but also at least an axial position of the rotary body (3) in relation to the axle unit (2), wherein the magnetic ring unit (15) at least sectionally surrounds the magnetic field sensor (25) annularly, and wherein the magnetic field sensor (25) is arranged with an axial offset to the axial center of the magnetic ring unit (15).

## Revendications

1. Dispositif de freinage (1) magnétorhéologique, destiné à freiner des déplacements en rotation, notamment système de commande (100) magnétorhéologique pour le réglage d'états de commande au moyen d'au moins des déplacements en rotation, pourvu d'au moins une unité d'axe (2) et d'au moins un corps rotatif (3) susceptible de tourner autour de l'unité d'axe (2), la capacité de rotation du corps rotatif (3) pouvant être freinée de manière ciblée au moyen d'au moins un système de freinage (4) magnétorhéologique et comprenant au moins un système de capteurs (5), destiné à détecter une position en rotation du corps rotatif (3), le système de capteurs (5) comprenant au moins une unité de bague magnétique (15) et au moins un capteur de champ magnétique (25), destiné à détecter un champ magnétique de l'unité de bague magnétique (15) et comprenant au moins un système de blindage (9) pour le blindage au moins partiel du système de capteurs (5) contre un champ magnétique d'une unité de bobines (24) du système de freinage (4), le système de blindage (9) comprenant au moins un corps de blindage (19) entourant au moins par endroits l'unité de bague magnétique (15) et au moins une unité de séparation (29), placée entre le corps de blindage (19) et l'unité de bague magnétique (15), faisant preuve d'une conductibilité magnétique plus faible d'un multiple que celle du corps de blindage (19) et étant prévu au moins un système de maintien (49), qui relie au moins partiellement de manière solidaire en rotation le système de blindage (9) avec le corps rotatif (3),
**caractérisé**
**en ce que** le système de blindage (9) comprend au moins un système de désaccouplement (39) magnétique, placé entre le corps de blindage (19) et le corps rotatif (3) et en ce que le système de désaccouplement (39) fait preuve d'une conductibilité magnétique plus faible d'un multiple que celle du corps de blindage (19) et en ce que le système de désaccouplement (39) est mis à disposition au moins partiellement par le système de maintien (49) et/ou
**en ce que** le système de maintien (49) comporte au moins un trajet s'étendant entre le corps rotatif (3) et le corps de blindage (19), lequel correspond à au moins un quart et de préférence à au moins la moitié d'un diamètre maximal d'une bobine électrique de l'unité de bobines (24).

2. Dispositif de freinage (1) magnétorhéologique selon l'une quelconque des revendications précédentes, le corps rotatif (3) et/ou le corps de blindage (19) étant assemblé(s) au moins partiellement en monobloc avec le système de maintien (49).

3. Dispositif de freinage (1) magnétorhéologique selon l'une quelconque des revendications précédentes, le corps rotatif (3) et/ou le corps de blindage (19) et/ou l'unité de séparation (29) étant monté(es) au moins partiellement sur le système de maintien (49).

4. Dispositif de freinage (1) magnétorhéologique selon l'une quelconque des revendications précédentes, le corps de blindage (19) n'étant pas placé entre le capteur de champ magnétique (25) et l'unité de bague magnétique (15), de telle sorte que le corps de blindage ne blinde pas le capteur de champ magnétique (25) contre le champ magnétique de l'unité de bague magnétique (15) qui doit être détecté.

5. Dispositif de freinage (1) magnétorhéologique selon l'une quelconque des revendications précédentes, le corps de blindage (19) entourant au moins par endroits l'unité de bague magnétique (15) au moins sur une face extérieure radiale et/ou le corps de blindage (19) entourant au moins par endroits l'unité de bague magnétique (15) au moins sur au moins une face axiale, laquelle est dirigée vers l'unité de bobines (24) du système de freinage (4).

6. Dispositif de freinage (1) magnétorhéologique selon l'une quelconque des revendications précédentes, l'unité de séparation (29) comprenant au moins une fente (290) s'écoulant entre le corps de blindage (19) et l'unité de bague magnétique (15) et au moins un agent de remplissage (291) placé dans la fente et l'agent de remplissage (291) assemblant de manière solidaire en rotation l'unité de bague magnétique (15) avec le corps de blindage (19).

7. Dispositif de freinage (1) magnétorhéologique selon l'une quelconque des revendications précédentes, au moyen de l'unité de séparation (29) et/ou du corps de blindage (19), l'unité de bague magnétique (15) étant assemblée de manière solidaire en rotation avec le système de désaccouplement (39) et le système de désaccouplement (39) étant assemblé au moins indirectement, de manière solidaire en rotation avec le corps rotatif (3).

8. Dispositif de freinage (1) magnétorhéologique selon l'une quelconque des revendications précédentes, le système de désaccouplement (39) comprenant au moins une douille de désaccouplement (390), laquelle entoure en direction radiale au moins l'unité d'axe (2) et est placée au moins par endroits au voisinage axial du corps rotatif (3).

9. Dispositif de freinage (1) magnétorhéologique selon la revendication précédente, la douille de désaccouplement (390) étant écartée en direction axiale du corps rotatif (3) par au moins une fente de désaccouplement (391).

10. Dispositif de freinage (1) magnétorhéologique selon l'une quelconque des deux revendications précédentes, la douille de désaccouplement (390) étant conçue au moins par endroits comme un composant séparé et/ou étant mise à disposition au moins par endroits par au moins une pièce auxiliaire (33) entourant le corps rotatif (3) dans la direction radiale et à cet effet, étant assemblée notamment en monobloc avec la pièce auxiliaire (33).

11. Dispositif de freinage (1) magnétorhéologique selon l'une quelconque des trois revendications précédentes, sur le système de maintien (49), notamment sur la douille de désaccouplement (390) étant fixé au moins un système d'étanchéité (7) et le système d'étanchéité (7) étant adjacent de manière à assurer l'étanchéité au corps rotatif (3) et/ou à au moins une pièce auxiliaire (33) entourant le corps rotatif (3) en direction radiale et/ou à l'unité d'axe (2), pour s'opposer à l'échappement d'un agent (34) magnétorhéologique du système de freinage placé dans un espace de réception (13).

12. Dispositif de freinage (1) magnétorhéologique selon l'une quelconque des quatre revendications précédentes, le système de maintien (49), notamment la douille de désaccouplement (390) comportant au moins une paroi axiale (392), laquelle s'étend entre le système de freinage (4) et l'unité de bague magnétique (15) et sur la paroi axiale (392) étant fixé(es) au moins une partie du système d'étanchéité (7) et/ou au moins un système de palier (22) pour le déplacement en rotation du corps rotatif (3) par rapport à l'unité d'axe (2).

13. Dispositif de freinage (1) magnétorhéologique selon l'une quelconque des cinq revendications précédentes, la douille de désaccouplement (390) étant fabriquée en matière plastique.

14. Dispositif de freinage (1) magnétorhéologique selon l'une quelconque des revendications précédentes, le corps rotatif (3) étant entouré en direction radiale par au moins une pièce auxiliaire (33) et sur au moins l'extrémité axiale de l'unité d'axe (2) sur laquelle st placée l'unité de bague magnétique (15), le corps rotatif (3) étant décalé vers l'arrière en direction axiale par rapport à la pièce auxiliaire (33).

15. Dispositif de freinage (1) magnétorhéologique selon l'une quelconque des revendications précédentes, le système de capteurs (5) étant adapté et conçu pour détecter additionnellement à la position en rotation du corps rotatif (3) également au moins une position axiale du corps rotatif (3) en rapport à l'unité d'axe (2) et l'unité de bague magnétique (15) entourant au moins partiellement le capteur de champ magnétique (25) à la manière d'un anneau et le capteur de champ magnétique (25) étant placé avec un décalage axial par rapport au centre axial de l'unité de bague magnétique (15).
